# EUROPEAN PATENT APPLICATION

(11) **EP 4 483 700 A1**
(43) Date of publication of application: **01.01.2025**
(21) Application number: 24184914.0
(22) Date of filing: 27.06.2024
(51) Int. Cl.: A01D 41/127, A01D 41/12, A01B 79/00

(54) **METHODS, SYSTEMS, APPARATUS, AND ARTICLES OF MANUFACTURE TO MONITOR A HARVESTING OPERATION**

(30) Priority: 30.06.2023 US 202363511561 P; 08.08.2023 US 202318446189; 07.11.2023 US 202318503896; 03.06.2024 US 202418732288
(71) Applicant: Deere & Company, Moline, IL 61265 (US)
(72) Inventor: VANDIKE, Nathan Ross, Geneseo, 61254 (US); MACKIN, Ryan P., Milan, 61264 (US); ANDERSON, Noel Wayne, Fargo, 58102 (US)
(74) Representative: Reddie & Grose LLP

(57) **Abstract**

Methods, systems, apparatus, and articles of manufacture to monitor performance of an agricultural vehicle are disclosed. An example apparatus disclosed herein includes memory, machine readable instructions, and programmable circuitry to execute the machine readable instructions to access an image captured by a camera associated with an agricultural vehicle, determine a harvesting operation metric corresponding to the image, generate interactive display information by storing the image in association with the harvesting operation metric, and cause presentation of the interactive display information via a user interface.

## Description

### RELATED APPLICATIONS

This patent arises from a continuation-in-part of U.S. Patent Application No. 18/503,896, filed on November 7, 2023, which is a continuation-in-part of U.S. Patent Application No. 18/446,189, filed on August 8, 2023, which claims the benefit of U.S. Provisional Patent Application No. 63/511,561, filed on June 30, 2023. U.S. Patent Application No. 18/503,896, U.S. Patent Application No. 18/446,189, and U.S. Provisional Patent Application No. 63/511,561 are hereby incorporated herein by reference in their entireties. Priority to U.S. Patent Application No. 18/503,896, U.S. Patent Application No. 18/446,189, and U.S. Provisional Patent Application No. 63/511,561 is hereby claimed.

### FIELD OF THE DISCLOSURE

This disclosure relates generally to agricultural vehicles and, more particularly, to methods, systems, apparatus, and articles of manufacture to monitor a harvesting operation.

### BACKGROUND

Agricultural vehicles commonly include cameras and/or other sensors to obtain operational data associated with a harvesting operation performed by the agricultural vehicle. In some instances, the operational data is associated with one or more subsystems (e.g., a residue system, a cleaning shoe, a separator, a header, etc.) of the agricultural vehicle, and/or is associated with a field on which the harvesting operation is performed.

### BRIEF DESCRIPTION OF THE DRAWINGS

FIG. 1 illustrates an example vehicle implementing example operation monitoring circuitry in accordance with teachings of this disclosure.
FIG. 2 is a block diagram of the example operation monitoring circuitry of FIG. 1.
FIG. 3 illustrates an example map generated by the example operation monitoring circuitry of FIGS. 1 and/or 2.
FIG. 4 illustrates an example plot generated by the example operation monitoring circuitry of FIGS. 1 and/or 2.
FIG. 5 illustrates an example table representing example harvesting operation information that can be monitored and/or obtained by the operation monitoring circuitry of FIG. 2.
FIG. 6 is a flowchart representative of example machine readable instructions and/or example operations that may be executed, instantiated, and/or performed by example programmable circuitry to implement the operation monitoring circuitry of FIG. 2.
FIG. 7 is a flowchart representative of example machine readable instructions and/or example operations that may be executed, instantiated, and/or performed by example programmable circuitry to update interactive display information in connection with block 616 of FIG. 6.
FIG. 8 is a block diagram of an example processing platform including programmable circuitry structured to execute, instantiate, and/or perform the example machine readable instructions and/or perform the example operations of FIGS. 6 and/or 7 to implement the operation monitoring circuitry of FIG. 2.
FIG. 9 is a block diagram of an example implementation of the programmable circuitry of FIG. 8.
FIG. 10 is a block diagram of another example implementation of the programmable circuitry of FIG. 8.

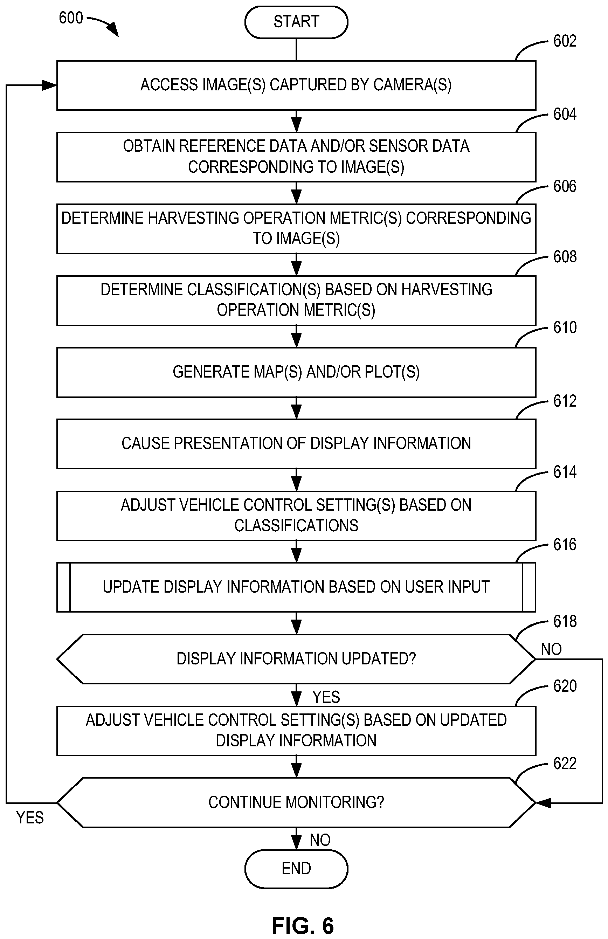

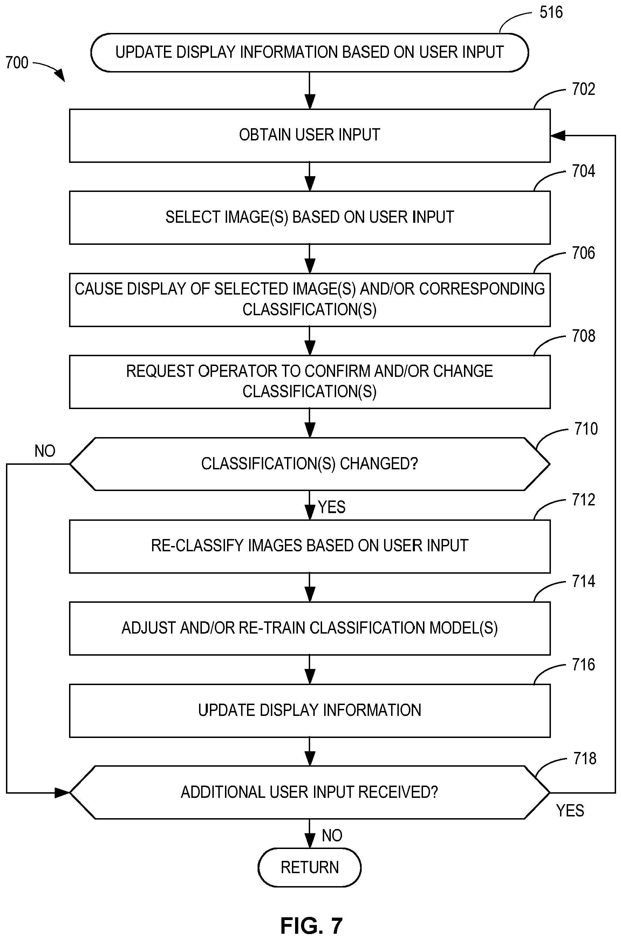

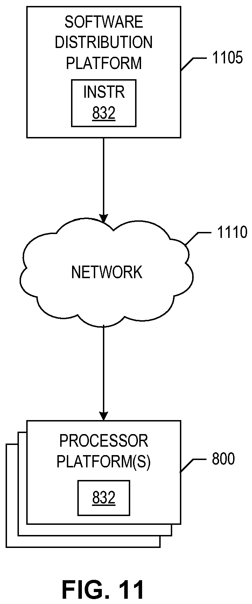

FIG. 11 is a block diagram of an example software/firmware/instructions distribution platform (e.g., one or more servers) to distribute software, instructions, and/or firmware (e.g., corresponding to the example machine readable instructions of FIGS. 6 and/or 7) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified in the below description.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

### DETAILED DESCRIPTION

Automation of vehicles (e.g., agricultural vehicles) is commercially desirable because automation can improve the accuracy with which operations (e.g., harvesting operations) are performed, reduce operator fatigue, improve efficiency, and accrue other benefits. Some agricultural vehicles (e.g., combine harvesters) include one or more example vehicle systems (e.g., a residue system, a header, a separator, a cleaning shoe, etc.) to perform a harvesting operation. During such harvesting operations, the header of the agricultural vehicle cuts and/or gathers crop material from a field, and the gathered crop material is provided to one or more additional vehicle systems (e.g., a threshing system, a cleaning system, etc.) for processing. For instance, the vehicle can perform threshing, separating, and/or cleaning processes to separate the crop plant material into grain material (e.g., corn, wheat, oats, etc.) and crop residue (e.g., straw, chaff, material other than grain (MOG), etc.). In some instances, the grain material is stored (e.g., in a grain storage tank of the vehicle), while the crop residue is output from the vehicle to produce one or more windrows on the field. In some such examples, a second vehicle (e.g., a baler) can perform a second operation (e.g., a baling operation) on the windrows to form one or more bales therefrom.

In some cases, parameter(s) of the vehicle system(s) of the vehicle (e.g., the combine harvester) can be adjusted to control and/or adjust one or more harvesting operation metrics associated with the harvesting operation. For instance, grain loss metric(s) (e.g., a quantity of harvested grain material inadvertently lost and/or output as crop residue from the vehicle) and/or a tailings metric(s) (e.g., a quantity and/or a material content of tailing material returned to the separator) can be adjusted by controlling actuator(s) associated with one or more crop processing subsystems (e.g., the separator, the cleaning shoe, the header, etc.) of the vehicle. In some cases, cut crop metric(s) (e.g., a cut height of crops and/or plants in the field) can be adjusted by controlling a speed of the vehicle and/or a height and/or position of the header. Further, in some instances, windrow metric(s) (e.g., a size and/or shape of the windrow(s) produced by the output crop residue) can be adjusted by controlling position(s) of one or more vanes of the residue system. In some instances, one(s) of the harvesting operation metrics are adjusted and/or monitored based on sensor data from one or more sensors associated with the vehicle (e.g., internal and/or external camera(s), impact sensor(s), radar sensor(s), moisture sensor(s), optical sensor(s), etc.).

In some cases, one(s) of the vehicle systems can be located internally to the vehicle, proximate a rear of the vehicle, and/or are otherwise not visible from a vehicle cab of the vehicle. As a result, monitoring performance of the vehicle system(s) by an operator may be difficult during operation of the vehicle (e.g., during a harvesting operation). Therefore, performance of the vehicle system(s) is often not considered by the operator until after completion of the operation. For instance, some parameters of the vehicle system(s) (e.g., speed(s) and/or position(s) of one or more actuators, header height and/or position, vehicle speed, etc.) are often not adjusted during operation of the vehicle, resulting in one or more of the harvesting operation metrics not satisfying corresponding threshold(s).

Examples disclosed herein gather and/or display operational data associated with one or more example agricultural operations (e.g., harvesting operations) performed by a vehicle (e.g., a combine harvester). In particular, examples disclosed herein enable an operator to monitor performance of one or more example vehicle systems during operation (e.g., in substantially real time) and/or after completion of the operation. Example operation monitoring circuitry disclosed herein accesses one or more example images captured by a camera associated with the vehicle, and obtains reference data including time(s) and/or geographic location(s) at which the image(s) were captured. In some examples, the operation monitoring circuitry determines one or more example harvesting operation metrics based on the image(s) and/or based on example sensor data obtained from one or more example sensors of the vehicle (e.g., impact sensor(s), volume sensor(s), header sensor(s), contact sensor(s), moisture sensor(s), drive sensor(s), optical sensor(s), laser sensor(s), sonar sensor(s), radar sensor(s), terahertz sensor(s), infrared sensor(s), ultraviolet sensor(s), etc.). In some examples, the harvesting operation metric(s) can include example grain loss metric(s), example tailings metric(s), example cut crop metric(s), example windrow metric(s), example plant metric(s) (e.g., plant height, stalk diameter, health status, etc.), example crop metric(s) (e.g., ear size(s) and/or height(s), pod size(s) and/or height(s), head size(s) and/or height(s), grain and/or kernel size(s), etc.), example material flow metric(s) (e.g., uniformity and/or consistency of the material flow, material distribution of the material flow, etc.), example field metric(s) (e.g., a condition of the field, presence of damage to and/or obstacles in the field, etc.), and/or example weed metric(s) (e.g., weed type(s), weed presence, weed density, etc.).

In some examples, the operation monitoring circuitry determines, based on the harvesting operation metric(s), example classification(s) for the corresponding one(s) of the images. In some examples, the classification(s) indicate whether one or more of the harvesting operation metrics satisfy respective example threshold(s) (e.g., harvesting operation metric threshold(s)). In some examples, the operation monitoring circuitry stores the image(s), the classification(s), and/or the harvesting operation metric(s) in association with the corresponding reference data to generate interactive display information (e.g., one or more example maps and/or plots), and causes presentation of the interactive display information via a user interface (e.g., a user interface on the vehicle, a mobile device, a remote device, etc.). In some examples, via the user interface, the operator can change and/or confirm one(s) of the classifications, cause the user interface to display, enlarge, and/or otherwise modify one(s) of the images, etc. In some examples, the operation monitoring circuitry re-trains one or more example classification model(s) (e.g., classifiers) and/or adjusts one or more classification threshold(s) based on the operator confirming and/or changing the one(s) of the classifications. In some examples, the interactive display information can be provided to a remote device (e.g., a mobile device, a computer, etc.) that is separate from the vehicle, such that that interactive display information can be presented to and/or updated by a remote operator in substantially real time and/or after an operation by the vehicle.

Advantageously, examples disclosed herein enable an operator of a vehicle to visually inspect performance of one or more vehicle systems at different times and/or locations during operation of the vehicle. As a result, examples disclosed herein enable adjustment of one or more parameters of the vehicle system(s) (e.g., travel speed of the vehicle, height and/or position of the header of the vehicle, position(s) and/or speed(s) of one or more actuators, etc.) based on the associated harvesting operation metric(s). For example, the adjustment can be made during an operation (e.g., in substantially real time), after a portion of the operation is complete, and/or after all of the operation is complete.

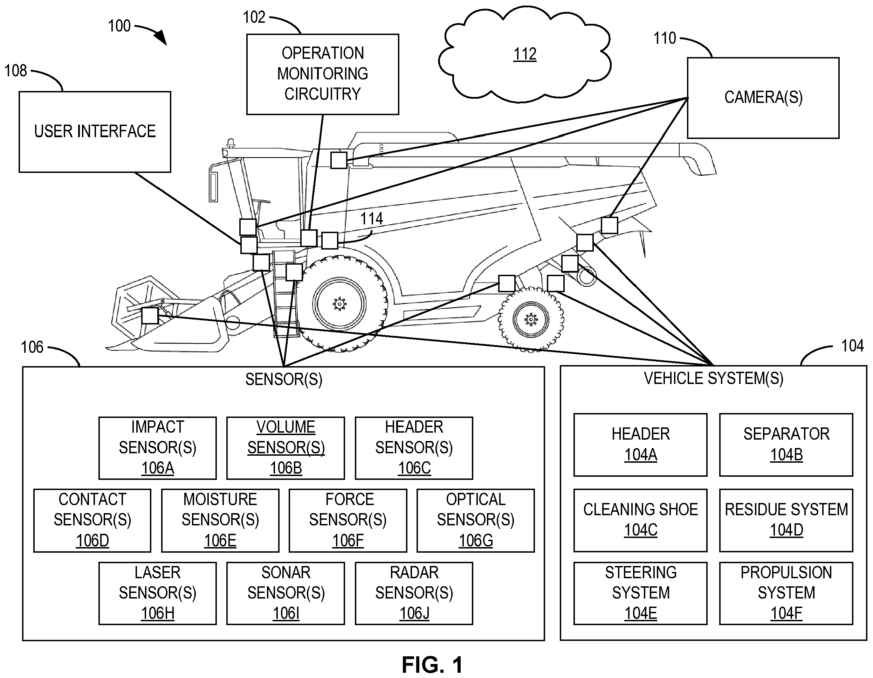

FIG. 1 illustrates an example vehicle 100 implementing example operation monitoring circuitry 102 in accordance with teachings of this disclosure. In the illustrated example of FIG. 1, the vehicle 100 is a harvester (e.g., a combine harvester) including one or more example vehicle systems (e.g., vehicle subsystems) 104 that may be used to perform and/or facilitate an example harvesting operation on a field. For example, the vehicle systems 104 include an example header 104A, an example separator (e.g., a separator system, a threshing and separation system) 104B, an example cleaning shoe (e.g., a cleaning system) 104C, an example residue system (e.g., a crop residue system) 104D, an example steering system 104E, and/or an example propulsion system 104F. In some examples, the vehicle 100 can include one or more different vehicle systems (e.g., in addition to or instead of one(s) of the vehicle systems 104 shown in FIG. 1).

In some examples, during a harvesting operation on a field, the header 104A cuts and/or gathers crop material (e.g., plant material) from the field to be processed by one(s) of the vehicle systems 104. Further, the separator 104B separates the crop material into grain material (e.g., corn, wheat, oats, etc.) and crop residue (e.g., straw, chaff, MOG, etc.). In some examples, the cleaning shoe 104C operates to further clean and/or remove MOG from the grain material, such that the grain material can be stored (e.g., in a grain storage tank of the vehicle 100) for later use. In some examples, the residue system 104D processes (e.g., chops and/or cuts into relatively smaller sizes) the crop residue material, then outputs the crop residue onto the field (e.g., to produce one or more windrows in the field). In some examples, the steering system 104E causes and/or controls steering of the vehicle 100 along one or more paths in the field, and the propulsion system 104F controls a speed (e.g., a travel speed) of the vehicle 100 along the one or more paths.

In the illustrated example of FIG. 1, the vehicle 100 further includes one or more example sensors (e.g., vehicle sensors) 106, an example user interface 108, and one or more example cameras 110. In this example, the operation monitoring circuitry 102 is implemented locally at the vehicle 100 to monitor performance data associated with a harvesting operation. In some examples, the operation monitoring circuitry 102 can be implemented remotely (e.g., in a cloud-based environment, on another vehicle and/or device, etc.), and the operation monitoring circuitry 102 can provide the performance data to the vehicle 100 (e.g., via an example network 112).

In the illustrated example of FIG. 1, the example sensors 106 collect and/or otherwise obtain sensor data associated with the vehicle 100. For example, one(s) of the sensors 106 can be associated with respective one(s) of the vehicle systems 104 (e.g., the sensors 106 can gather and/or obtain sensor data corresponding to the respective vehicle system(s) 104). In this example, the sensors 106 can include one or more example impact sensors 106A, one or more example volume sensors 106B, one or more example header sensors 106C, one or more example contact sensors 106D, one or more example moisture sensors 106E, one or more example force sensors (e.g., crop processing force sensors) 106F, one or more example optical sensors 106G, one or more example laser sensors 106H, one or more example sonar sensors 1061, and/or one or more example radar sensors 106J. In some examples, the vehicle 100 can include one or more additional and/or different types of sensors (e.g., in addition to and/or instead of one(s) of the sensors 106 shown in FIG. 1). For example, the vehicle 100 can additionally or alternatively include electromagnetic sensor(s), pressure sensor(s), loss sensor(s), capacitive sensor(s), etc. In some examples, the sensor(s) 106 provide sensor data to the operation monitoring circuitry 102 for use in monitoring performance of the vehicle 100 and/or monitoring data associated with the field and/or crops planted thereon. Additionally or alternatively, the sensor(s) 106 can be communicatively coupled to the network 112 to provide the sensor data to a cloud-based storage environment, to one or more other vehicles, etc.

In the example of FIG. 1, the camera(s) 110 capture one or more example images representative of a scene surrounding the vehicle 100 and/or internal to the vehicle 100. For example, the camera(s) 110 can include external camera(s) such as one or more front cameras (e.g., forward-facing camera(s)) positioned proximate a front end of the vehicle 100 to capture image(s) corresponding to a forward-facing scene of the vehicle 100, and/or one or more rear cameras (e.g., rearward-facing camera(s)) positioned proximate a rear end of the vehicle 100 to capture image(s) corresponding to a rearward-facing scene of the vehicle 100. Additionally or alternatively, the camera(s) 110 can include one or more internal cameras to capture image(s) of a scene internal to the vehicle 100. For example, the image(s) can represent harvested crop material passing through one(s) of the vehicle systems 104 (e.g., the separator 104B, the cleaning shoe 104C, etc.), and/or can represent crop residue material processed and/or output by the residue system 104D. In some examples, the camera(s) 110 capture images of portions of the field in front of, to the side of, and/or behind the vehicle 100. In some examples, the camera(s) 110 provide one or more of the captured images to the operation monitoring circuitry 102 for use in monitoring performance of one(s) of the vehicle systems 104 and/or for monitoring a condition of the field and/or the plants thereon. Additionally or alternatively, the camera(s) 110 can be communicatively coupled to the network 112 to provide the captured images to a cloud-based storage environment, to one or more other vehicles, etc.

In the example of FIG. 1, the user interface 108 presents information to an operator of the vehicle 100 and/or obtains user input from the operator. In some examples, the user interface 108 includes a display (e.g., an interactive display) to present information associated with the vehicle 100. For example, the display can present a map (e.g., an interactive map) to the operator, where the map associates harvesting operation metrics and/or images with one or more locations at which the harvesting operation metrics and/or images were measured and/or obtained. Additionally or alternatively, the display can present a time history (e.g., an interactive time history) associating the harvesting operation metrics and/or the images with times at which the harvesting operation metrics and/or images were obtained. In some examples, the user interface 108 can present example classifications determined for the harvesting operation metrics at the corresponding locations and/or times. In some examples, the user interface 108 selectively displays and/or presents information to the operator based on user input. For example, the user interface 108 can selectively present one(s) of the harvesting operation metrics and/or the images based on the user input. In some examples, the user interface 108 can adjust and/or update, based on the user input, one or more of the harvesting operation metrics and/or the corresponding classifications. While the user interface 108 is located in a cab of the vehicle 100 in this example, the user interface 108 can be implemented remotely (e.g., at a computer separate from the vehicle 100, on a mobile device, etc.).

In the example of FIG. 1, the operation monitoring circuitry 102 monitors performance of one or more of the vehicle systems 104 by evaluating and/or presenting one or more harvesting operation metrics associated with a harvesting operation performed by the vehicle systems 104. For example, the operation monitoring circuitry 102 determines and/or obtains the harvesting operations metrics (e.g., and/or the classifications associated therewith) at corresponding locations and/or times. In some examples, the operation monitoring circuitry 102 determines the harvesting operation metrics and/or classifications based on image data from the camera(s) 110, sensor data from the sensor(s) 106, and/or user input to the user interface 108. In some examples, the operation monitoring circuitry 102 generates interactive maps and/or time histories for presentation by the user interface 108. For example, the operation monitoring circuitry 102 can generate and/or update the maps and/or time histories to indicate the harvesting operation metrics and/or the classifications for corresponding one(s) of the locations and/or times. In some examples, the operation monitoring circuitry 102 can adjust, based on the harvesting operation metrics and/or the classifications, one or more example control parameters associated with one(s) of the vehicle systems 104. For example, the operation monitoring circuitry 102 can adjust position(s) and/or speed(s) of actuator(s) associated with respective one(s) of the vehicle systems 104, travel speed and/or travel direction of the vehicle 100, etc. In the example of FIG. 1, the operation monitoring circuitry 102 is communicatively coupled to the example network 112. In some examples, the operation monitoring circuitry 102 can provide, via the network 112, the harvesting operation metrics, the classifications, the maps, and/or the time histories to one or more computer systems communicatively coupled to the network 112, to one or more cloud-based storage environments, etc.

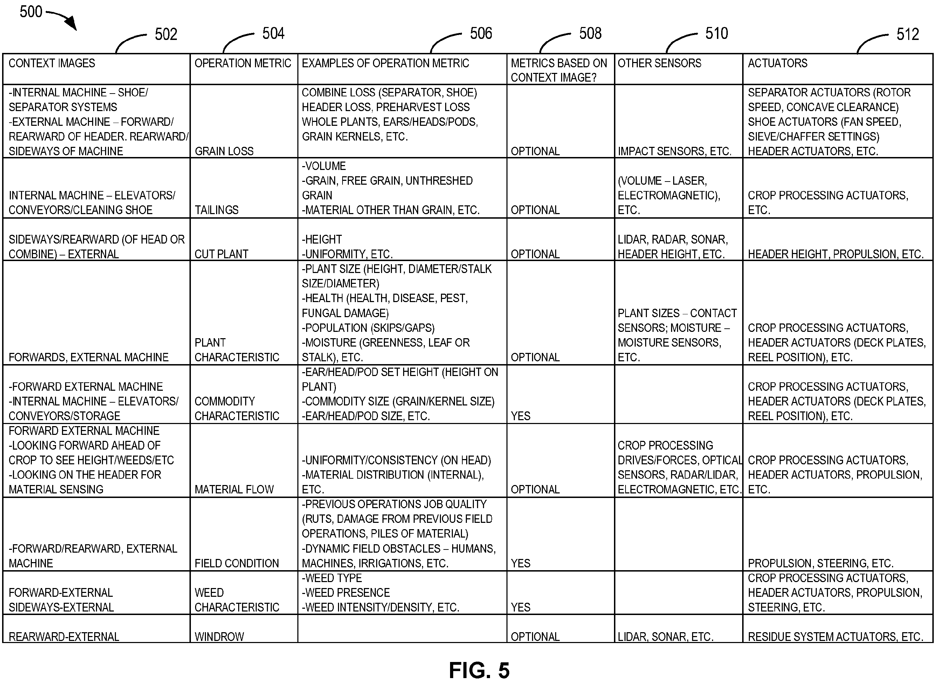

In some examples, during an example harvesting operation of the vehicle 100, the operation monitoring circuitry 102 determines the harvesting operation metrics associated with a field on which the harvesting operation is performed, unprocessed plant material on the field, crop material harvested and/or processed by the vehicle 100, crop residue output by the vehicle 100, etc. For example, the operation monitoring circuitry 102 determines at least one of an example grain loss metric, an example tailings metric, an example cut plant metric, an example plant characteristic metric, an example commodity characteristic metric, an example material flow metric, an example field condition metric, an example weed characteristic metric, or an example windrow metric. Example harvesting metrics that can be determined and/or obtained are represented in example FIG. 5 below.

In some examples, the grain loss metric represents a quantity (e.g., a total volume, a percentage, etc.) of harvested grain material inadvertently lost and/or output from the vehicle 100. In some examples, the grain loss metric includes an example preharvest loss, which represents an amount of grain material lost (e.g., fallen to the ground) prior to the harvesting operation. For example, during the harvesting operation, a portion of the grain material included in harvested crop material may be lost as a result of processing of the harvested crop material by the header 104A, the separator 104B, and/or the cleaning shoe 104C. In some examples, based on settings of one or more header actuators associated with the header 104A (e.g., a reel speed of the header 104A), the header 104A may knock a first portion of the grain material from planted crops onto the ground, resulting in loss (e.g., header loss) of the first portion of grain material. In some examples, based on settings of one or more separator actuators associated with the separator 104B (e.g., rotor speed of the separator 104B, concave clearance of the separator 104B, etc.), the separator 104B does not perform adequate threshing and/or separation of a second portion of the grain material from the harvested crop material, such that the second portion of the grain material is inadvertently output with the crop residue from the vehicle 100 (e.g., by the residue system 104D). In some examples, based on the settings of the one or more separator actuators associated with the separator 104B, the separator 104B may inadvertently damage and/or destroy the second portion of the grain material. In some examples, based on settings of one or more shoe actuators associated with the cleaning shoe 104C (e.g., a fan speed of the cleaning shoe 104C, sieve and/or chaffer settings of the cleaning shoe 104C, etc.), the cleaning shoe 104C can overprocess (and/or under process) a third portion of the grain material, resulting in loss of the third portion of the grain material. In some examples, the grain loss metric includes the preharvest loss (e.g., loss of grain material that occurs prior to the harvesting operation), a header loss (e.g., loss of grain material as a result of the header 104A knocking the grain material from the planted crops), and/or a combine loss (e.g., a separator loss associated with the separator 104B and/or a cleaning shoe loss associated with the cleaning shoe 104C, a loss of grain material output from the vehicle 100 as a result of inadequate processing by the separator 104B and/or the cleaning shoe 104C).

In some examples, the grain loss metric includes an example combine loss metric (e.g., an amount of grain material lost at the separator 104B and/or the cleaning shoe 104C), an example header loss metric (e.g., an amount of grain material lost at the header 104A), an example preharvest loss metric (e.g., an amount of grain material lost and/or fallen to the ground prior to harvesting by the vehicle 100). In some examples, the grain loss metric is representative of amount(s) (e.g., volume(s), percentage(s), and/or count(s)) of whole plants, ears, heads, pods, and/or grain kernels lost.

In some examples, the operation monitoring circuitry 102 determines the grain loss metric based on one or more example signals (e.g., characteristic signals) from one(s) of the sensors 106. For example, the operation monitoring circuitry 102 can obtain the signal(s) from one or more of the impact sensors 106A operatively coupled to and/or positioned at the header 104A, the separator 104B, and/or the cleaning shoe 104C. In some such examples, the impact sensor(s) 106A can detect presence of grain material at respective location(s) of the header 104A, the separator 104B, and/or the cleaning shoe 104C by measuring an impact force of crop material contacting the respective location(s). In some examples, the operation monitoring circuitry 102 obtains, from one(s) of the cameras 110, one or more example images (e.g., context images) associated with the grain loss metric. For example, first image(s) can be representative of one or more first location(s) internal to the vehicle 100 (e.g., at the separator 104B, at the cleaning shoe 104C, etc.), and second image(s) can be representative of one or more second location(s) external to the vehicle 100 (e.g., forward and/or rearward with respect to the header 104A, rearward and/or sideways with respect to the vehicle 100, etc.). In some examples, the operation monitoring circuitry 102 determines the grain loss metric based on the first and/or second image(s) (e.g., in addition to or instead of the signal(s) from the impact sensors 106A).

In some examples, based on the grain loss metric, the operation monitoring circuitry 102 adjusts one or more example settings of the vehicle system(s) 104. For example, the operation monitoring circuitry 102 may adjust, based on the grain loss metric, rotor speed and/or concave clearance of the separator 104B, reel speed and/or position of the header 104A, fan speed, sieve settings, and/or chaffer settings of the cleaning shoe 104C, etc.

In some examples, the tailings metric represents a quantity (e.g., a volume, a tailings material volume) and/or a material content (e.g., respective amount(s) and/or proportion(s) of grain, free grain, unthreshed grain, material other than grain, etc.) of example tailing material returned to the separator 104B from the cleaning shoe 104C. For example, the cleaning shoe 104C includes an example upper sieve (e.g., a chaffer) and an example lower sieve (e.g., a sieve) to process the harvested crop material. In some examples, a portion of the harvested crop material may pass through the upper sieve, but does not pass through the lower sieve. In some such examples, the portion of harvested crop material is returned to the separator 104B as tailings material for further processing. In some examples, the tailings metric includes a volume of the tailings material returned to the separator 104B and/or one or more quantities (e.g., volume(s), proportion(s), etc.) representative of material content (e.g., grain, free grain, unthreshed grain, MOG, etc.) of the tailings material at respective location(s) (e.g., the lower sieve and/or the upper sieve) of the cleaning shoe 104C.

In some examples, the operation monitoring circuitry 102 determines the tailings metric based on one or more example signals (e.g., characteristic signals) from one(s) of the sensors 106. For example, the operation monitoring circuitry 102 can obtain the signal(s) from one or more of the laser sensors 106H and/or one or more of the volume sensors 106B (e.g., electromagnetic sensors) operatively coupled to and/or positioned at or near the separator 104B and/or the cleaning shoe 104C (e.g., along a conveyance elevator between the separator 104B and the cleaning shoe 104C). In some such examples, the laser sensor(s) 106H and/or the volume sensor(s) 106B can measure the volume of the tailings material at respective location(s) of the separator 104B and/or the cleaning shoe 104C. In some examples, the operation monitoring circuitry 102 obtains, from one(s) of the cameras 110, one or more example images (e.g., context images) associated with the tailings metric. For example, the image(s) can be representative of one or more location(s) internal to the vehicle 100 (e.g., at the separator 104B, at the cleaning shoe 104C, at an example grain elevator and/or conveyer of the vehicle 100, etc.). In some examples, the operation monitoring circuitry 102 determines the tailings metric based on the image(s) (e.g., in addition to or instead of the signal(s) from the laser sensor(s) 106H and/or the volume sensor(s) 106B). In some examples, based on the tailings metric, the operation monitoring circuitry 102 adjusts one or more example settings of the vehicle system(s) 104. For example, the operation monitoring circuitry 102 may adjust, based on the tailings metric, rotor speed and/or concave clearance of the separator 104B, fan speed, sieve settings, and/or chaffer settings of the cleaning shoe 104C, travel speed of the vehicle 100, feed rate of the vehicle 100, etc.

In some examples, the cut plant metric represents a cut height and/or uniformity of cut crops and/or cut plants in the field (e.g., after the harvesting operation is performed). For example, the cut plant metric can include heights of plants and/or stubble (e.g., cut crops) in the field, and/or can include average height(s) and/or variability of height(s) of the cut plants and/or cut crops in respective area(s) of the field. In some examples, the operation monitoring circuitry 102 determines the cut plant metric based on one or more example signals (e.g., characteristic signals) from one(s) of the sensors 106. For example, the operation monitoring circuitry 102 can obtain the signal(s) from the laser sensor(s) 206H, the sonar sensor(s) 1061, and/or the radar sensor(s) 106J operatively coupled to the vehicle 100 and facing outward (e.g., sideways and/or rearward) from the vehicle 100. Additionally or alternatively, the operation monitoring circuitry 102 can obtain the signal(s) from one or more position sensors operatively coupled to the header 104A, where the signal(s) are representative of a header position (e.g., a height from the ground) of the header 104A.

In some examples, the operation monitoring circuitry 102 obtains, from one(s) of the cameras 110, one or more example images (e.g., context images) associated with the cut plant metric. For example, the image(s) can be representative of one or more locations external to the vehicle 100 (e.g., rearward and/or sideways with respect to the vehicle 100). In some such examples, the operation monitoring circuitry 102 determines the cut plant metric based on the image(s) (e.g., in addition to or instead of the signal(s) from the laser sensor(s) 206H, the sonar sensor(s) 106I, the radar sensor(s) 106J, and/or the header sensor(s) 106C). In some examples, based on the cut plant metric, the operation monitoring circuitry 102 adjusts one or more example settings of the vehicle system(s) 104. For example, the operation monitoring circuitry 102 may adjust, based on the cut plant metric, header position (e.g., header height) of the header 104A, propulsion and/or travel speed of the propulsion system 104F, etc.

In some examples, the plant characteristic metric represents characteristic(s) (e.g., size, health status, moisture level, etc.) associated with one or more plants (e.g., unharvested plants) in the field. For example, the plant characteristic metric can include plant size (e.g., plant height, plant diameter, stalk size, stalk diameter, etc.), health status of the plants (e.g., whether disease, pests, and/or fungal damage is present), plant density (e.g., whether there are skips and/or gaps between plants and/or plant rows), moisture level (e.g., based on greenness of leaves and/or stalks of the plants), plant state (e.g., whether the plants are standing, lodged, down, etc.), and/or a leaf-stem ratio of the plants. In some examples, the operation monitoring circuitry 102 determines the plant characteristic metric based on one or more example signals (e.g., characteristic signals) from one(s) of the sensors 106. For example, the operation monitoring circuitry 102 can obtain the signal(s) from the contact sensor(s) 206D and/or the moisture sensor(s) 106E operatively coupled to the vehicle 100. In some such examples, the contact sensor(s) 106D can detect the plant sizes of plants based on contact between the plants and the contact sensor(s) 106D, and the moisture sensor(s) 106E can measure moisture level of the plants.

In some examples, the operation monitoring circuitry 102 obtains, from one(s) of the cameras 110, one or more example images (e.g., context images) associated with the plant characteristic metric. For example, the image(s) can be representative of a location external to the vehicle 100 (e.g., forward with respect to the vehicle 100). In some examples, the image(s) can be representative of a location internal to the vehicle 100. In some such examples, the operation monitoring circuitry 102 determines the plant characteristic metric based on the image(s) (e.g., in addition to or instead of the signal(s) from the contact sensor(s) 106D and/or the moisture sensor(s) 106E). In some examples, based on the plant characteristic metric, the operation monitoring circuitry 102 adjusts one or more example settings of the vehicle system(s) 104. For example, the operation monitoring circuitry 102 may adjust, based on the plant characteristic metric (e.g., the plant size), reel and/or deck plate positions of the header 104A, rotor speed and/or concave clearance of the separator 104B, fan speed, sieve settings, and/or chaffer settings of the cleaning shoe 104C, etc.

In some examples, the commodity characteristic metric represents characteristic(s) associated one or more example commodities (e.g., ears, heads, pods, grains, kernels, etc.) harvested by the vehicle 100 during the harvesting operation. For example, the commodity characteristic metric can include set height (e.g., height on plants) of ears, heads, and/or pods on the plants in the field, size(s) of the ears, heads, and/or pods, and/or size(s) of the harvested grain and/or kernels, etc. In some examples, the operation monitoring circuitry 102 determines the commodity characteristic metric based on one or more example images (e.g., context images) obtained from one(s) of the cameras 110. For example, first one(s) of the images can be representative of one or more location(s) internal to the vehicle 100 (e.g., at a grain elevator and/or a conveyer of the vehicle 100, at a grain storage of the vehicle 100, etc.), and second one(s) of the images can be representative of one or more locations external to the vehicle 100 (e.g., forward with respect to the vehicle 100, etc.). In some examples, based on the commodity characteristic metric, the operation monitoring circuitry 102 adjusts one or more example settings of the vehicle system(s) 104. For example, the operation monitoring circuitry 102 may adjust, based on the commodity characteristic metric, reel and/or deck plate positions of the header 104A, rotor speed and/or concave clearance of the separator 104B, fan speed and/or sieve and/or chaffer settings of the cleaning shoe 104C, etc.

In some examples, the material flow metric represents a volumetric flow rate, uniformity, and/or consistency of material (e.g., harvested crop material) flowing across the header 104A and/or into the vehicle 100, and/or represents a material distribution of the harvested crop material inside (e.g., internal to) the vehicle 100 and/or one or more of the vehicle systems 104. For example, it may be desirable to maintain a substantially constant material flow rate across and/or through one(s) of the vehicle systems 104 to enable efficient processing of the harvested crop material. In some examples, the operation monitoring circuitry 102 determines the material flow metric based on one or more example signals (e.g., characteristic signals) from one(s) of the sensors 106. For example, the operation monitoring circuitry 102 can obtain the signal(s) from the force sensor(s) 106F, the optical sensor(s) 106G, the laser sensor(s) 106H, and/or the radar sensor(s) 106J operatively coupled to one or more crop processing systems of the vehicle 100 (e.g., the header 104A, the separator 104B, the cleaning shoe 104C, etc.) and/or operatively coupled to other location(s) of the vehicle 100 (e.g., a cab of the vehicle 100, a front-facing portion of the vehicle 100, etc.) to detect the flow of material through and/or across the crop processing system(s).

In some examples, the operation monitoring circuitry 102 obtains, from one(s) of the cameras 110, one or more example images (e.g., context images) associated with the material flow metric. For example, the image(s) can be representative of a location external to the vehicle 100 (e.g., forward with respect to the vehicle 100, ahead of and/or across the header 104A, etc.). In some such examples, the operation monitoring circuitry 102 determines the material flow metric based on the image(s) (e.g., in addition to or instead of the signal(s) from the force sensor(s) 106F, the optical sensor(s) 106G, the laser sensor(s) 106H, and/or the radar sensor(s) 106J). In some examples, based on the material flow metric, the operation monitoring circuitry 102 adjusts one or more example settings of the vehicle system(s) 104. For example, the operation monitoring circuitry 102 may adjust, based on the material flow metric, reel and/or deck plate positions of the header 104A, rotor speed and/or concave clearance of the separator 104B, fan speed, sieve settings, and/or chaffer settings of the cleaning shoe 104C, travel speed and/or propulsion of the propulsion system 104F, etc.

In some examples, the field condition metric represents characteristic(s) of the field on which the harvesting operation is to be performed by the vehicle 100. For example, the field condition metric can indicate job quality of a previous operation on the field (e.g., whether there are ruts, damage, and/or piles of material from the previous operation), and/or can indicate presence of one or more obstacles (e.g., humans, machines, irrigations, etc.) in the field. In some examples, the operation monitoring circuitry 102 determines the field condition metric based on one or more example images (e.g., context images) obtained from one(s) of the cameras 110. For example, the image(s) can be representative of one or more location(s) external to the vehicle 100 (e.g., forward and/or rearward with respect to the vehicle 100). In some examples, based on the field condition metric, the operation monitoring circuitry 102 adjusts one or more example settings of the vehicle system(s) 104. For example, the operation monitoring circuitry 102 may adjust, based on the field condition metric, propulsion and/or travel speed of the vehicle 100 (e.g., via the propulsion system 104F) and/or steering of the vehicle 100 (e.g., via the steering system 104E). For example, the operation monitoring circuitry 102 can steer the vehicle 100 (e.g., via the steering system 104E) to traverse (e.g., drive around and/or drive over) a detected obstacle in the field.

In some examples, the weed characteristic metric represents one or more characteristics associated with detected weeds in the field. For example, the weed characteristic metric can indicate weed type(s), weed presence, and/or weed density at one or more locations in the field. In some examples, the operation monitoring circuitry 102 determines the weed characteristic metric based on one or more example images (e.g., context images) obtained from one(s) of the cameras 110. For example, the image(s) can be representative of one or more location(s) external to the vehicle 100 (e.g., forward and/or rearward with respect to the vehicle 100, sideways with respect to the vehicle 100, etc.). In some examples, based on the weed characteristic metric, the operation monitoring circuitry 102 adjusts one or more example settings of the vehicle system(s) 104. For example, the operation monitoring circuitry 102 may adjust, based on the weed characteristic metric, propulsion and/or travel speed of the vehicle 100 (e.g., via the propulsion system 104F), steering of the vehicle 100 (e.g., via the steering system 104E), and/or one or more actuator settings of one or more crop processing systems (e.g., reel and/or deck plate positions of the header 104A, rotor speed and/or concave clearance of the separator 104B, fan speed, sieve settings, and/or chaffer settings of the cleaning shoe 104C, etc.).

In some examples, the windrow metric represents a shape and/or size (e.g., width) of one or more windrows produced by the vehicle 100. For example, instead of the residue system 104D chopping and/or reducing a size of crop residue, the residue system 104D can output the unprocessed crop residue onto the field to produce the windrow(s). In some examples, the operation monitoring circuitry 102 determines the windrow metric based on one or more example signals (e.g., characteristic signals) from one(s) of the sensors 106. For example, the operation monitoring circuitry 102 can obtain the signal(s) from one(s) of the laser sensor(s) 106H and/or the sonar sensor(s) 106I operatively coupled to a rear portion of the vehicle 100 to detect the size and/or shape of the windrow(s) produced by the vehicle 100.

In some examples, the operation monitoring circuitry 102 obtains, from one(s) of the cameras 110, one or more example images (e.g., context images) associated with the windrow metric. For example, the image(s) can be representative of a location external to the vehicle 100 (e.g., rearward with respect to the vehicle 100). In some such examples, the operation monitoring circuitry 102 determines the windrow metric based on the image(s) (e.g., in addition to or instead of the signal(s) from the laser sensor(s) 106H and/or the sonar sensor(s) 106I). In some examples, based on the windrow metric, the operation monitoring circuitry 102 adjusts one or more example settings of the vehicle system(s) 104. For example, the operation monitoring circuitry 102 may adjust, based on the windrow metric, one or more actuator settings associated with the residue system 104D (e.g., vane positions of the residue system 104D, etc.).

While harvesting operation metrics such as the grain loss metric, the tailings metric, the cut plant metric, the plant characteristic metric, the commodity characteristic metric, the material flow metric, the field condition metric, the weed characteristic metric, and/or the windrow metric are described in the example of FIG. 1, one or more different harvesting operation metrics can additionally or alternatively be determined by the operation monitoring circuitry 102.

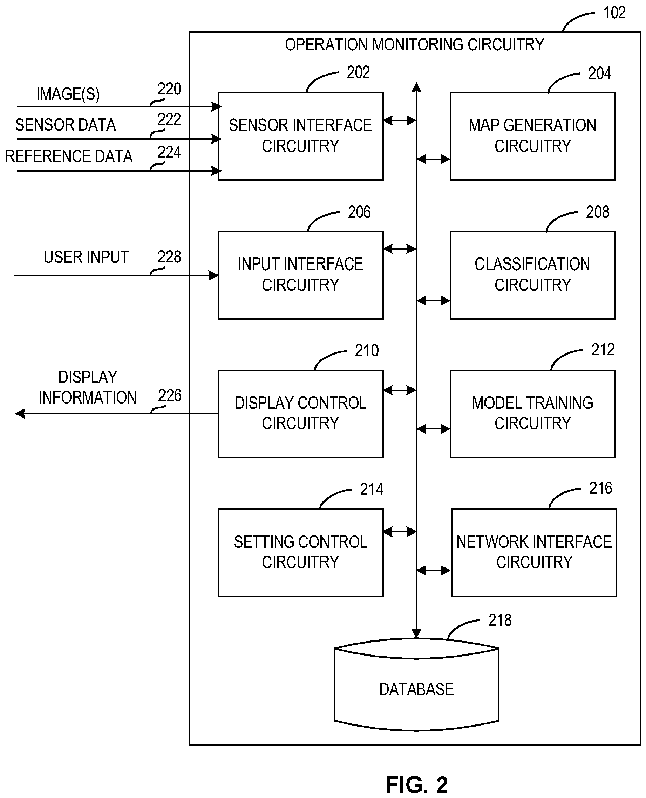

FIG. 2 is a block diagram of an example implementation of the operation monitoring circuitry 102 of FIG. 1 to monitor one or more harvesting operation metrics associated with the vehicle 100. The operation monitoring circuitry 102 of FIG. 2 may be instantiated (e.g., creating an instance of, bring into being for any length of time, materialize, implement, etc.) by programmable circuitry such as a Central Processor Unit (CPU) executing first instructions. Additionally or alternatively, the operation monitoring circuitry 102 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

In the illustrated example of FIG. 2, the operation monitoring circuitry 102 includes example sensor interface circuitry 202, example map generation circuitry 204, example input interface circuitry 206, example classification circuitry 208, example display control circuitry 210, example model training circuitry 212, example setting control circuitry 214, example network interface circuitry 216, and an example database 218.

The example database 218 stores data utilized and/or obtained by the operation monitoring circuitry 102. The example database 218 of FIG. 2 is implemented by any memory, storage device and/or storage disc for storing data such as, for example, flash memory, magnetic media, optical media, solid state memory, hard drive(s), thumb drive(s), etc. Furthermore, the data stored in the example database 218 may be in any data format such as, for example, binary data, comma delimited data, tab delimited data, structured query language (SQL) structures, etc. While, in the illustrated example, the example database 218 is illustrated as a single device, the example database 218 and/or any other data storage devices described herein may be implemented by any number and/or type(s) of memories.

The example sensor interface circuitry 202 obtains and/or retrieves data from the example camera(s) 110 and/or the example sensor(s) 106 of FIG. 1. For example, the sensor interface circuitry 202 obtains one or more example images (e.g., video frames) 220 captured by the example camera(s) 110 of FIG. 1. In some examples, the images 220 include first image(s) representative of the field in the projected path of the vehicle 100, second image(s) representative of a scene along or internal to one or more subsystems of the vehicle 100 (e.g., a grain elevator and/or a conveyor of the vehicle 100, a grain collecting tank of the vehicle 100, etc.), third image(s) representative of a rearward-facing scene with respect to the vehicle 100, fourth image(s) representative of a scene to a side of the vehicle 100, etc. In this example, the sensor interface circuitry 202 obtains example sensor data 222 from one or more of the sensors 106 of FIG. 1. In some examples, the sensor data 222 can include data from one or more remote sensors external to the vehicle 100 (e.g., sensors implemented on a different vehicle, sensors implemented at a base station, etc.). In the example of FIG. 2, the sensor interface circuitry 202 obtains example reference data 224 from one or more of the sensor(s) 106 and/or from a computer system of the vehicle 100. For example, the reference data 224 can include location data (e.g., GPS data) from a global positioning system (GPS) 114 implemented on the vehicle 100. In some examples, the reference data 224 can include time data from a timer implemented in the computer system of the vehicle 100. In some examples, the sensor interface circuitry 202 causes storage of the time data in association with the corresponding image(s) 220 and/or the sensor data 222 in the database 218 of FIG. 2. In some examples, the sensor interface circuitry 202 is instantiated by programmable circuitry executing sensor interface circuitry instructions and/or configured to perform operations such as those represented by the flowchart(s) of FIG. 6.

In the illustrated example of FIG. 2, the classification circuitry 208 determines one or more classifications (e.g., ratings) associated with one(s) of the image(s) 220. For example, the classification circuitry 208 can determine the classification(s) based on one or more harvesting operation metrics determined for the corresponding image(s) 220. In some examples, the harvesting operation metrics include a grain loss metric (e.g., a quantity and/or percentage of grain lost during a harvesting operation), a tailings metric (e.g., a volume and/or material content of tailings material processed by the vehicle 100), a cut plant metric (e.g., height and/or uniformity of cut plants in the field), a plant characteristic metric (e.g., size, health status, and/or moisture levels of plants in the field), a commodity characteristic metric (e.g., size and/or height of pods, ears, heads, grains, kernels, etc.), a material flow metric (e.g., uniformity and/or distribution of material flow to and/or through the vehicle system(s) 104), a field condition metric (e.g., presence of ruts, damage, and/or other obstacles in the field), a weed characteristic metric (e.g., type, presence, and/or density of weeds in the field), a windrow metric (e.g., a size and/or shape of windrow(s) on the field), etc.

In some examples, the classification circuitry 208 determines the harvesting operation metrics based on image processing and/or optical analysis of the corresponding image(s) 220. For example, to determine the grain loss metric(s), the classification circuitry 208 can analyze the image(s) 220 to detect presence of grain material in the crop residue internal to the vehicle 100 (e.g., at the residue system 104D) and/or output from the vehicle 100 onto the field. In some examples, grain kernels may be recognizable from physical attributes such as color, shape, or size relative to other material in the image(s). In some examples, the classification circuitry 208 can analyze and/or identify such physical attributes based on classical computer vision techniques. In some examples, the classification circuitry 208 executes one or more neural network models based on the image(s) 220 to detect the grain material in the image(s) 220 and/or to determine size(s) and/or count(s) of the grain material. In some examples, as a result of the execution of neural network model(s), the classification circuitry 208 determines a quantity (e.g., a volume) of the grain material and/or a proportion of the grain material relative to crop residue in respective one(s) of the image(s) 220.

In some examples, when the image(s) 220 are representative of a portion of a field surrounding the vehicle 100, the classification circuitry 208 can analyze the image(s) 220 to determine one or more of the cut plant metric(s), the plant characteristic metric(s), the commodity characteristic metric(s), the material flow metric(s), the field condition metric(s), the weed characteristic metric(s) and/or the windrow metric(s). For example, the classification circuitry 208 can execute one or more neural network models based on the image(s) 220 to determine, for example, height(s) and/or size(s) of plants in the field, health status of the plants, moisture levels of the plants (e.g., based on greenness of the plants), etc. In some examples, the classification circuitry 208 can execute one or more different neural network models to determine remaining one(s) of the harvesting operation metrics (e.g., the cut plant metric(s), the plant characteristic metric(s), the commodity characteristic metric(s), the material flow metric(s), the field condition metric(s), the weed characteristic metric(s) and/or the windrow metric(s), etc.) based on corresponding one(s) of the images 220. Additionally or alternatively, the classification circuitry 208 determines one or more of the harvesting operation metrics based on the sensor data 222 from one or more of the sensors 106. For example, the sensor data 222 can include signal(s) representative of one or more objects (e.g., unharvested plants, ruts, damage from a previous operation, weeds, windrows, etc.) in the field on which the vehicle 100 performs the harvesting operation. In such examples, the classification circuitry 208 can determine one or more of the harvesting operation metrics based on the signal(s).

In some examples, the classification circuitry 208 determines, based on the harvesting operation metric(s), one or more classifications for corresponding one(s) of the image(s) 220. For example, the classifications can be indicative of grain loss (e.g., whether the amount of grain loss is acceptable or excessive) and/or can be indicative of performance of one(s) of the vehicle systems 104 of FIG. 1. In some examples, the classifications can be representative of one or more other harvesting operation metrics (e.g., a tailings metric, a cut plant metric, a plant characteristic metric, a commodity characteristic metric, a material flow metric, a field condition metric, a weed characteristic metric, a windrow metric, etc.) determined by the classification circuitry 208. In some examples, the classification circuitry 208 determines the classifications for respective ones of the images 220 by comparing the associated harvesting operation metric(s) to one or more classification thresholds. In some examples, a user may define and/or select one(s) the classification thresholds by defining absolute values and/or by defining a set number of classification categories. In some examples, one(s) of the classification thresholds may be computer-generated based on an output of clustering and/or other algorithms.

In one example, the classification circuitry 208 determines that the grain loss represented in first one(s) of the image(s) 220 is low and/or acceptable when the associated grain loss metric satisfies an example grain loss threshold (e.g., is at or below the grain loss threshold). Additionally or alternatively, the classification circuitry 208 determines that the grain loss in second one(s) of the image(s) 220 is excessive when the associated grain loss metric does not satisfy the grain loss threshold (e.g., is greater than the grain loss threshold).

In some examples, respective different classification thresholds can be used to determine classifications for corresponding one(s) of the harvesting operation metrics. For example, while classification(s) based on grain loss metric(s) are described above, one or more different classifications (e.g., tailings classification(s), cut plant classification(s), plant characteristic classification(s), commodity characteristic classification(s), material flow classification(s), field condition classification(s), weed characteristic classification(s), windrow classification(s), etc.) can be determined for one or more of images 220 based on comparison of the harvesting operation metric(s) to corresponding classification threshold(s). In some examples, the classification circuitry 208 can determine multiple classifications for one(s) of the images 220 based on different one(s) of the harvesting operation metrics. In one example, for a particular one of the images 220, the classification circuitry 208 can determine a first classification based on the grain loss, a second classification based on the material flow, and/or a third classification based on the windrow shape, for example. In some examples, the classification circuitry 208 can determine an aggregate classification based on a combination of the multiple classifications for the particular image 220. In some examples, the classification circuitry 208 causes storage of the harvesting operation metrics and/or the classifications in association with the corresponding image(s) 220 in the example database 218.

In some examples, the classification circuitry 208 determines the classifications based on one or more neural network model(s) (e.g., classification model(s), classifier(s)). For example, the classification circuitry 208 executes the classification model(s) based on one(s) of the image(s) 220 and/or based on the sensor data 222 to determine the associated classification(s). In some examples, the classification model(s) are trained based on labeled training data including images of processed residue, harvested grain material, unharvested plants in a field, etc. and associated classification labels.

In some examples, the classification circuitry 208 determines confidence levels for corresponding ones of the classifications. For example, the confidence levels represent a likelihood that the classifications are accurate and/or correct for the corresponding images 220. In some examples, the classification circuitry 208 determines the confidence levels based on differences between the harvesting operation metric(s) and the corresponding classification threshold(s). For example, when a difference between one(s) of the classification thresholds and the corresponding harvesting operation metric(s) for a particular one of the images 220 is relatively small (e.g., less than ±10%, less than ±5%, less than ±2%, etc.), the classification circuitry 208 determines that one or more of the classifications for the particular one of the images 220 are associated with a low confidence level. Conversely, when the difference between the one(s) of the classification thresholds and the corresponding harvesting operation metric(s) is relatively large (e.g., at least ±10%, at least ±5%, at least ±2%, etc.), the classification circuitry 208 determines that the corresponding classification(s) for the particular one of the images 220 are associated with a high confidence level.

In some examples, the classification circuitry 208 can determine multiple confidence levels corresponding to multiple classifications for an image. For example, for one of the images 220 representative of a forward-facing scene with respect to the vehicle 100 (e.g., a projected path of the vehicle 100), the classification circuitry 208 can determine a first confidence level associated with a plant characteristic classification and/or a second confidence level associated with a field condition classification, where the first and second confidence levels can be different. In some examples, the classification circuitry 208 stores the confidence levels in association with the classifications in the database 218. In some examples, the classification circuitry 208 is instantiated by programmable circuitry executing classification circuitry instructions and/or configured to perform operations such as those represented by the flowchart(s) of FIGS. 6 and/or 7. In some examples, confidence levels in image-derived classifications may be impacted by environmental dust, material on camera lenses of the camera(s) 110, lighting conditions, similarity between current data and training data, and/or presentation of material being imaged.

In the illustrated example of FIG. 2, the model training circuitry 212 generates and/or trains one or more models (e.g., neural network model(s)) utilized by the classification circuitry 208. For example, the model training circuitry 212 generates and/or trains one or more of classification model(s) and/or one or more harvesting operation metric detection models (e.g., grain loss detection model(s), plant characteristic detection model(s), field condition detection model(s), etc.) utilized by the classification circuitry 208.

The example model training circuitry 212 performs training of the neural network(s) implemented by the classification circuitry 208. In the example of FIG. 2, training data can be stored in the database 218 and can include a threshold number (e.g., hundreds, thousands) of reference images with labels indicating, for example, classification(s) (e.g., acceptable grain loss, excessive grain loss, etc.) and/or corresponding harvesting operation metric(s) (e.g., grain loss, plant size and/or height, field condition, windrow shape, etc.). In some examples, the labels can include context characteristics corresponding to the reference image(s). For example, the context characteristics can indicate whether the reference images represent a ground, a location internal to and/or external to the vehicle 100, and/or one or more other objects (e.g., a windrow, unharvested crops, etc.). In some examples, the model training circuitry 212 sub-divides the training data into a training data set and a validation data set. For example, a first portion (e.g., 80%) of the training data can be used as the training data set for training the neural network model(s), and a second portion (e.g., 20%) of the training data can be used as the validation data set for validating the neural network model(s).

In some examples, the model training circuitry 212 trains one or more neural networks(s) based on the labeled classifications, the reference images, and/or the harvesting operation metrics (e.g., grain loss, plant size and/or height, plant health, commodity size and/or height, material flow rate, field condition, weed characteristics, windrow shape, etc.) from the training data set. For example, the model training circuitry 212 correlates the classifications with the corresponding harvesting operation metrics and/or with detected features in the reference images from the training data set, and adjusts parameters of the neural network(s) based on the correlation. In particular, the model training circuitry 212 adjusts the parameters such that the neural network(s) output the labeled classifications when the harvesting operation metrics and/or the reference images from the training data set are provided as inputs to the neural network(s). In some examples, the one or more classification model(s) are generated as a result of the neural network training.

In some examples, the model training circuitry 212 validates the classification model(s) based on the second portion of the training data (e.g., the validation data set). For example, the model training circuitry 212 evaluates the classification model(s) based on the validation data set. In such examples, the model training circuitry 212 determines classifications by providing the reference images and/or the harvesting operation metrics from the validation data set as input to the trained classification model(s). In some examples, the model training circuitry 212 compares the determined classifications to corresponding reference classifications from the validation data set.

In some examples, the model training circuitry 212 determines whether the determined classifications satisfy an accuracy threshold by comparing the determined classifications to the corresponding reference classifications from the validation data set. For example, the model training circuitry 212 determines that the determined classifications do not satisfy the accuracy threshold when the determined classifications correctly predict less than a threshold percentage (e.g., less than 90%, less than 95%, etc.) of the corresponding reference classifications. Conversely, the model training circuitry 212 determines that the determined classifications satisfy the accuracy threshold when the determined classifications correctly predict at least the threshold percentage (e.g., at least 90%, at least 95%, etc.) of the corresponding reference classifications. In some examples, the model training circuitry 212 re-trains the classification model(s) when the determined classifications do not satisfy the accuracy threshold. In some examples, when the determined classifications satisfy the accuracy threshold, the model training circuitry 212 stores the trained classification model(s) in the database 218 for use by the classification circuitry 208. In some examples, the model training circuitry 212 is instantiated by programmable circuitry executing model training circuitry instructions and/or configured to perform operations such as those represented by the flowchart(s) of FIGS. 6 and/or 7.

Artificial intelligence (AI), including machine learning (ML), deep learning (DL), and/or other artificial machine-driven logic, enables machines (e.g., computers, logic circuits, etc.) to use a model to process input data to generate an output based on patterns and/or associations previously learned by the model via a training process. For instance, the model may be trained with data to recognize patterns and/or associations and follow such patterns and/or associations when processing input data such that other input(s) result in output(s) consistent with the recognized patterns and/or associations.

Many different types of machine learning models and/or machine learning architectures exist. In examples disclosed herein, machine learning models based on Long Short-Term Memory (LSTM) architectures are used. In general, machine learning models/architectures that are suitable to use in the example approaches disclosed herein will be convolutional neural networks (CNNs). However, other types of machine learning models could additionally or alternatively be used.

In general, implementing a ML/Al system involves two phases, a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data. Additionally, hyperparameters are used as part of the training process to control how the learning is performed (e.g., a learning rate, a number of layers to be used in the machine learning model, etc.). Hyperparameters are defined to be training parameters that are determined prior to initiating the training process.

Different types of training may be performed based on the type ofML/AI model and/or the expected output. For example, supervised training uses inputs and corresponding expected (e.g., labeled) outputs to select parameters (e.g., by iterating over combinations of select parameters) for the ML/AI model that reduce model error. As used herein, labelling refers to an expected output of the machine learning model (e.g., a classification, an expected output value, etc.). Alternatively, unsupervised training (e.g., used in deep learning, a subset of machine learning, etc.) involves inferring patterns from inputs to select parameters for the ML/Al model (e.g., without the benefit of expected (e.g., labeled) outputs).

In some examples disclosed herein, ML/AI models are trained using stochastic gradient descent. However, any other training algorithm may additionally or alternatively be used. In examples disclosed herein, training is performed until a targeted accuracy level is reached (e.g., >95%). Training is performed using hyperparameters that control how the learning is performed (e.g., a learning rate, a number of layers to be used in the machine learning model, etc.). In some examples, pre-trained model(s) are used. In some examples re-training may be performed. Such re-training may be performed in response to, for example, poor harvesting operation metric detection due to, for instance, low ambient lighting.

Training is performed using training data. Because supervised training is used, the training data is labeled. In examples disclosed herein, the training data originates from a threshold number (e.g., hundreds, thousands) of reference images labeled with associated classifications (e.g., acceptable grain loss, excessive grain loss, etc.) and/or harvesting operation metrics (e.g., grain loss, plant size and/or height, commodity size and/or height, material flow rate and/or distribution, field condition, weed type and/or density, windrow shape, etc.). Labeling can be applied to the training data by the operator of the vehicle 100, where the labeling includes identifying a classification for the underlying reference images.

Once training is complete, the model is deployed for use as an executable construct that processes an input and provides an output based on the network of nodes and connections defined in the model. In examples disclosed herein, the model(s) are stored in the database 218. The model(s) may then be executed by the classification circuitry 208 of FIG. 2.

Once trained, the deployed model may be operated in an inference phase to process data. In the inference phase, data to be analyzed (e.g., live data) is input to the model, and the model executes to create an output. This inference phase can be thought of as the AI "thinking" to generate the output based on what it learned from the training (e.g., by executing the model to apply the learned patterns and/or associations to the live data). In some examples, input data undergoes pre-processing before being used as an input to the machine learning model. Moreover, in some examples, the output data may undergo post-processing after it is generated by the AI model to transform the output into a useful result (e.g., a display of data, an instruction to be executed by a machine, etc.).

In some examples, output of the deployed model may be captured and provided as feedback. By analyzing the feedback, an accuracy of the deployed model can be determined. If the feedback indicates that the accuracy of the deployed model is less than a threshold or other criterion, training of an updated model can be triggered using the feedback and an updated training data set, hyperparameters, etc., to generate an updated, deployed model.

Referring to FIG. 2, the map generation circuitry 204 generates one or more maps (e.g., interactive maps) based on the image(s) 220, the reference data 224, the harvesting operation metrics, and/or the classifications determined by the classification circuitry 208. For example, the map generation circuitry 204 generates the map(s) by associating the image(s) 220 and at least one of the harvesting operation metric(s) or the classification(s) with the corresponding reference data 224.

In some examples, the map generation circuitry 204 generates one or more example geographic maps (e.g., location maps) by associating the image(s) 220, the harvesting operation metric(s), and/or the classification(s) with corresponding geographic locations of the vehicle 100 at which the image(s) 220 were captured. For example, for one(s) of the geographic locations of the vehicle 100 represented in the reference data 224, the resulting geographic map(s) indicate one(s) of the images 220 captured at the geographic location(s), the harvesting operation metric(s) determined for the one(s) of the images 220, the classification(s) determined for the one(s) of the images 220, etc.

Additionally or alternatively, the map generation circuitry 204 generates one or more time plots (e.g., time histories) by associating the image(s) 220, the harvesting operation metric(s), and/or the classification(s) with corresponding times at which the image(s) 220 were captured. For example, for one(s) of the times represented in the reference data 224, the resulting time plot(s) indicate one(s) of the images 220 captured at the corresponding time(s), the harvesting operation metric(s) determined for the one(s) of the images 220, the classification(s) determined for the one(s) of the images 220, etc.

In some examples, the map generation circuitry 204 can include filtered and/or modified values for the harvesting operation metric(s) in the map(s) and/or the plot(s). For example, the map generation circuitry 204 can average the values of the harvesting operation metrics across multiple ones of the images 220 to reduce noise in the harvesting operation metrics. In some examples, the map generation circuitry 204 stores the filtered and/or averaged values (e.g., in addition to or instead of the unfiltered harvesting operation metrics) in association with the corresponding images 220, geographic location(s), and/or time(s). In some examples, when an operator selects one(s) of the geographic location(s) and/or the time(s), the filtered values are presented to the operator via the user interface 108 of FIG. 1 along with one(s) of the images 220 associated with the filtered value(s) for the selected location(s) and/or time(s).

In some examples, the map generation circuitry 204 generates and/or updates the map(s) during and/or after one or more operations (e.g., harvesting operations) of the vehicle 100 on a field. For example, the map generation circuitry 204 can periodically update the map(s) to include new images, new harvesting operation metrics, and/or new classifications obtained for different locations and/or times at which the vehicle 100 has operated. In some examples, the map generation circuitry 204 generates the map(s) after completion of the operation. In some examples, the map generation circuitry 204 provides the one or more map(s) (e.g., the geographic map(s) and/or the time plot(s)) to the database 218 for storage therein. In some examples, the map generation circuitry 204 is instantiated by programmable circuitry executing map generation circuitry instructions and/or configured to perform operations such as those represented by the flowchart(s) of FIGS. 6 and/or 7.

In the example of FIG. 2, the display control circuitry 210 controls presentation of the one or more maps (e.g., the geographic map(s) and/or the time plot(s)) to an operator of the vehicle 100 and/or to a remote operator. For example, the display control circuitry 210 generates and/or provides example display information (e.g., interactive display information) 226 to the example user interface 108 of FIG. 1 for presentation thereon. In some examples, the display information 226 includes at least one of the maps and/or one or more portions of the map(s), one or more of the image(s) 220, one or more of the classifications, and/or one or more of the harvesting operation metrics to be presented to the operator. In some examples, the display control circuitry 210 provides the display information 226 to a remote device communicatively coupled to the operation monitoring circuitry 102 (e.g., via the network 112 of FIG. 1). In some examples, the remote device can include a mobile device, a computer, a display device, etc. In some examples, the display control circuitry 210 adjusts, based on example user input 228, the display information 226 to be presented. For example, the display control circuitry 210 adjusts the display information 226 to present different portions of the map(s), enlarge and/or reduce portions of the map(s), display selected one(s) of the image(s) 220, etc. In some examples, the display control circuitry 210 is instantiated by programmable circuitry executing display control circuitry instructions and/or configured to perform operations such as those represented by the flowchart(s) of FIGS. 6 and/or 7.

In the illustrated example of FIG. 2, the input interface circuitry 206 obtains the example user input 228 provided by the operator of the vehicle 100. For example, the user input 228 may be provided by the operator via the example user interface 108 of FIG. 1. In some examples, the operator can select, via the user input 228, one(s) of the images 220 to be presented by the user interface 108. In some examples, the operator can select the one(s) of the images 220 by selecting, via the user interface 108, one or more of the locations (e.g., represented in the geographic map(s)) and/or one or more of the times (e.g., represented in the time plot(s)). In such examples, based on the user input 228, the display control circuitry 210 adjusts the display information 226 to present the one(s) of the images 220 corresponding to the selected location(s) and/or time(s). In some such examples, the display control circuitry 210 causes the user interface 108 to present the classifications, the confidence levels, and/or the harvesting operation metrics associated with the selected image(s) 220.

In some examples, the operator can select the one(s) of the images 220 by selecting, via the user interface 108, one or more of the classifications, one or more values for the harvesting operation metrics, and/or one or more of the confidence levels. In such examples, the display control circuitry 210 adjusts the display information 226 to present the one(s) of the images 220 corresponding to the selected classification(s), the selected value(s) of the harvesting operation metrics, and/or the selected confidence level(s). In some examples, the operator can select a combination of the location(s), the time(s), the classification(s), the harvesting operation metric(s), and/or the confidence level(s), and the display control circuitry 210 causes the user interface 108 to present one(s) of the images 220 corresponding to the selected combination.

In some examples, the operator can confirm and/or adjust, via the user interface 108, one(s) of the classifications and/or one(s) of the harvesting operation metrics for corresponding one(s) of the image(s) 220. In some examples, the display control circuitry 210 requests the operator to confirm one(s) of the classifications assigned to the one(s) of the images 220. For example, the display control circuitry 210 identifies one(s) of the classification having a low confidence level, and causes the user interface 108 to present the classification(s) along with the associated one(s) of the images 220. In such examples, the display control circuitry 210 presents, via the user interface 108, an option to the operator to confirm or change the classification(s). In some examples, in response to the operator confirming the classification(s), the classification circuitry 208 updates the confidence level(s) of the classification(s) to a high confidence level.

In some examples, in response to the operator adjusting one(s) of the classifications and/or one(s) of the harvesting operation metrics, the classification circuitry 208 updates (e.g., automatically updates) the corresponding classification(s) and/or the harvesting operation metric(s) stored in the database 218 and/or included in the display information 226 presented by the user interface 108. For example, when the operator updates and/or changes the classification for a first one of the images 220, the classification circuitry 208 identifies second one(s) of the images 220 that have similar harvesting operation metrics compared to the first one of the images 220, and the classification circuitry 208 similarly updates the classifications of the second one(s) of the images 220. In some examples, the model training circuitry 212 re-trains one or more neural network models based on the updated classification(s) and/or the updated harvesting operation metric(s). For example, the model training circuitry 212 can include the updated classification(s) and/or confirmed classification(s), along with associated one(s) of the images 220, as new training data for the classification model(s), and trains and/or re-trains the classification model(s) based on the new training data.

In some examples, the classification circuitry 208 adjusts one or more of the classification thresholds based on the updated classification(s) selected by the operator. For example, when the operator changes and/or selects the classification for one of the images 220, the classification circuitry 208 updates the classification threshold(s) such that the updated classification satisfies the classification threshold(s). Stated differently, the classification circuitry 208 adjusts the classification threshold(s) such that the classification circuitry 208 outputs the user-selected classification when the associated one of the images 220 is evaluated based on the classification threshold(s). In some examples, the classification circuitry 208 adjusts the classification threshold(s) in response to the operator changing at least a threshold number (e.g., one, five, ten, twenty, etc.) of the classification(s). In some examples, the operator can adjust one(s) of the classification threshold(s) based on the user input 228 to the input interface circuitry 206. In some examples, after adjustment of the classification threshold(s), the classification circuitry 208 re-evaluates the classification(s) for one(s) of the images 220 based on the updated classification threshold(s). In some examples, the input interface circuitry 206 is instantiated by programmable circuitry executing input interface circuitry instructions and/or configured to perform operations such as those represented by the flowchart(s) of FIG. 6.

In the illustrated example of FIG. 2, the setting control circuitry 214 determines whether one or more control settings (e.g., actuator settings) of the vehicle system(s) 104 of FIG. 1 are to be adjusted based on the classification(s) and/or the harvesting operation metric(s). In some examples, the control settings include at least one of a height and/or position of the header 104A, position(s) and/or speed(s) of actuator(s) associated with the header 104A, rotor speed and/or concave clearance of the separator 104B, position(s) and/or speed(s) of actuator(s) associated with the separator 104B, fan speed of the cleaning shoe 104C, sieve and/or chaffer settings of the cleaning shoe 104C, position(s) and/or speed(s) of actuator(s) associated with the cleaning shoe 104C, propulsion and/or travel speed of the propulsion system 104F, deck plate and/or reel positions of the header 104A, steering direction of the steering system 104E, vane position(s) of the residue system 104D, etc. In some examples, one or more different control settings may additionally or alternatively be adjusted by the setting control circuitry 214. In some examples, the setting control circuitry 214 directs one(s) of the vehicle systems 104 to adjust one(s) of the vehicle control settings in response to determining that one or more of the harvesting operation metrics are not satisfied at one or more locations and/or times. For example, in response to determining that the grain loss is excessive for a threshold duration (e.g., the previous 3 seconds, the previous 10 seconds, etc.) for which the vehicle 100 operates on a field, the setting control circuitry 214 directs the header 104A, the separator 104B, and/or the cleaning shoe 104C to adjust the one(s) of the vehicle control settings. In some examples, the setting control circuitry 214 is instantiated by programmable circuitry executing setting control circuitry instructions and/or configured to perform operations such as those represented by the flowchart(s) of FIGS. 6 and/or 7.

In the illustrated example of FIG. 2, the network interface circuitry 216 provides and/or obtains information via the example network 112 of FIG. 1. For example, the network interface circuitry 216 can provide information generated and/or obtained by the operation monitoring circuitry 102 (e.g., the image(s) 220, the sensor data 222, the reference data 224, the geographic map(s), the time plot(s), the harvesting operation metric(s), the classification(s), the classification model(s), etc.) to one or more cloud-based environments for storage therein. In some examples, the network interface circuitry 216 is communicatively coupled to one or more devices (e.g., mobile device(s), computer(s)) via the network 112. In some such examples, the network interface circuitry 216 can provide the information to the device(s) for storage and/or presentation thereon, and/or can obtain user input from the device(s) to adjust and/or confirm the classification(s), to adjust one or more of the classification thresholds, etc. In some examples, the network interface circuitry 216 is instantiated by programmable circuitry executing network interface circuitry instructions and/or configured to perform operations such as those represented by the flowchart(s) of FIGS. 6 and/or 7.

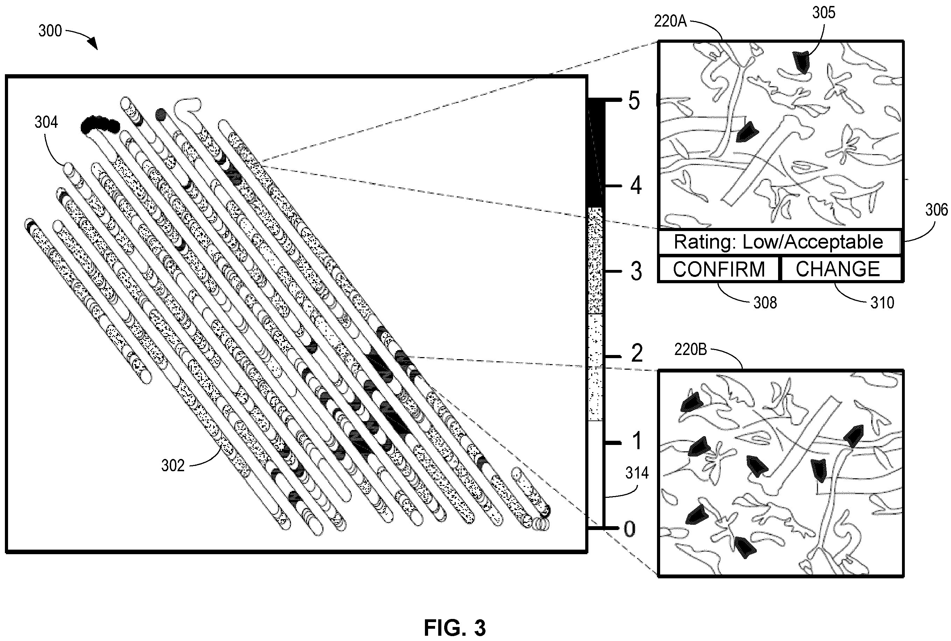

FIG. 3 illustrates a first example map (e.g., a geographic map) 300 generated by the example operation monitoring circuitry 102 of FIGS. 1 and/or 2. In some examples, the first map 300 is generated by the example map generation circuitry 204 of FIG. 2 and presented to an operator of the vehicle 100 of FIG. 1 during operation of the vehicle 100. In the illustrated example of FIG. 3, the first map 300 associates locations of the vehicle 100 with corresponding operation information (e.g., one(s) of the images 220, the harvesting operation metrics, the classifications, and/or the confidence levels) captured and/or determined for the locations. In the example of FIG. 3, the performance information is obtained as the vehicle 100 traverses example rows (e.g., crop rows) 302 on a field.

In some examples, the operation information for the different locations is represented by corresponding markers (e.g., points, dots) 304 on the first map 300. In some examples, the operation information at a particular location is represented by a characteristic (e.g., a color, a shape, a size, a brightness, a pattern, etc.) of the corresponding marker 304. In FIG. 3, for example, colors and/or shading of the markers 304 represent a grain loss amount (e.g., a total volume of grain material and/or a proportion of grain material relative to crop residue material output by the vehicle 100) at the corresponding locations, where darker colors indicate greater grain loss. In the example of FIG. 3, the grain loss metric is represented as an example percentage (e.g., up to 5%) along an example color bar 314. While the color bar 314 represents percentages up to 5% in this example, the color bar 314 can represent a different range of percentages (e.g., up to 10%, up to 15%, etc.) and/or can represent a different quantity (e.g., a total volume of lost grain, etc.) in some examples. In some examples, the colors of the markers 304 indicate the classifications of the grain loss and/or one or more other harvesting operation metrics. In this example, a first color of the markers 304 can indicate that the grain loss is acceptable, and a second color of the markers 304 can indicate that the grain loss is excessive. Stated differently, the first color of the markers 304 can indicate a first classification associated with one(s) of the harvesting operation metrics, and the second color of the markers 304 can indicate a second classification (e.g., different from the first classification) associated with the one(s) of the harvesting operation metrics.

In some examples, when the operator of the vehicle 100 selects, via the example user interface 108 of FIG. 1, one(s) of the markers 304 on the first map 300, the example display control circuitry 210 of FIG. 2 causes the user interface 108 to present one(s) of the image(s) 220 (e.g., a first example image 220A and/or a second example image 220B) corresponding to the selected marker(s) 304. In the illustrated example of FIG. 3, the first image 220A is representative of crop residue output by the vehicle 100 at a first location, and the second image 220B is representative of crop residue output by the vehicle 100 at a second location (e.g., different from the first location). In this example, the crop residue represented in the first and second images 220A, 220B includes example grain material 305, where the grain material 305 is inadvertently output with the crop residue (e.g., as a result of insufficient threshing and/or separation by the separator 104B). In some examples, a quantity of the grain material 305 represented in one(s) of the images 220A, 220B (e.g., a number of kernels, a volume of the grain material 305, a proportion of the grain material 305 relative to the crop residue, etc.) corresponds to the grain loss metric for the one(s) of the images 220A, 220B.

In this example, the display control circuitry 210 causes the user interface 108 to present a first example classification (e.g., a first rating, a first grain loss classification) 306 determined for the crop residue at the first location (e.g., represented in the first image 220A), where the first classification 306 indicates that the grain loss at the first location is low and/or acceptable in this example. In some examples, the operator of the vehicle 100 can select one or more classifications, and the display control circuitry 210 causes the user interface 108 to present one(s) of the images 220 corresponding to the selected classification(s).

In the example of FIG. 3, the display control circuitry 210 enables the operator to change or confirm the first classification 306 associated with the first image 220A. For example, the operator can visually inspect the first image 220A to determine whether the first classification 306 is correct and/or accurate. In this example, the display control circuitry 210 causes the user interface 108 to present a first example interactive control (e.g., a first button) 308 for confirming and/or approving the first classification 306 and a second example interactive control (e.g., a second button) 310 for changing the first classification 306. In some examples, the display control circuitry 210 causes the user interface 108 to present the first and second interactive controls 308, 310 in response to the example classification circuitry 208 of FIG. 2 determining that the first classification 306 is associated with a low confidence level.

In some examples, in response to the operator engaging the first interactive control 308, the classification circuitry 208 updates the confidence level associated with the first classification 306 to a high confidence level. In some examples, in response to the operator engaging the second interactive control 310, the operator can switch the first classification 306 to a different classification (e.g., from low and/or acceptable to excessive). In some examples, in response to a change in the first classification 306, the display control circuitry 210 updates the first classification 306 presented on the user interface 108 and/or updates the color of the corresponding marker 304 presented on the user interface 108.

In some examples, the classification circuitry 208 updates classifications for the grain loss in the crop residue at one or more different locations of the first map 300 based on the change in the first classification 306. For example, the classification circuitry 208 compares the images 220 and/or the harvesting operation metrics at the one or more locations to the first image 220A and/or the harvesting operation metrics associated with the first image 220A. Based on the comparison, the classification circuitry 208 identifies one(s) of the locations having substantially similar characteristics (e.g., similar harvesting operation metrics and/or similar image characteristics) compared to the location at which the first image 220A was captured. In some such examples, the classification circuitry 208 updates the classification(s) for the identified locations to match the updated first classification 306. In some examples, the classification circuitry 208 adjusts or updates one or more classifications thresholds and/or re-trains one or more classifiers (e.g., classification model(s)) in response to the change in the first classification 306.

In some examples, the display control circuitry 210 causes the user interface 108 to present one or more options for selecting and/or displaying multiple ones of the images 220. For example, the display control circuitry 210 can present options to the operator for selecting and/or displaying one(s) of the images 220 corresponding to a particular classification, confidence level, harvesting operation metric value, range of harvesting operation metric values, and/or region of the map 300. In some such examples, the display control circuitry 210 enables the operator to simultaneously update, via the user interface 108, multiple ones of the classifications, the confidence levels, and/or the harvesting operation metric values for one(s) of the images 220.

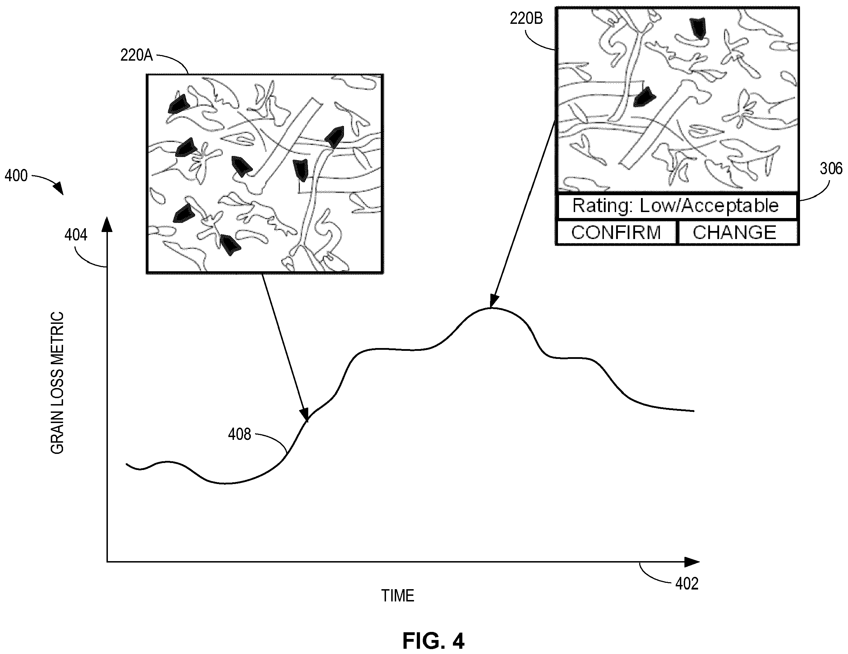

FIG. 4 illustrates an example plot (e.g., a time plot, a time history) 400 generated by the example operation monitoring circuitry 102 of FIGS. 1 and/or 2. In some examples, the plot 400 is generated by the example map generation circuitry 204 of FIG. 2 during operation of the vehicle 100. In the illustrated example of FIG. 4, the plot 400 associates operation information (e.g., one(s) of the images 220, the harvesting operation metrics, the classifications, and/or the confidence levels) with corresponding times at which the operation information was captured and/or determined. In some examples, the map generation circuitry 204 generates the plot 400 in addition to or instead of the map 300 of FIG. 3.

In the illustrated example of FIG. 4, the plot 400 includes a first example axis 402 representative of the times at which the operation information was captured and/or determined. In this example, the plot 400 includes a second example axis 404 representative of values for particular one(s) of the harvesting operation metrics, such as the grain loss metric in this example. In the example of FIG. 4, the second axis 404 can represent a quantity of grain loss (e.g., a volume, a proportion relative to crop yield, a proportion relative to an area of a field, etc.) in one(s) of the images 220. In some examples, a different one of the harvesting operation metrics can be represented by the second axis 404. In this example, the plot 400 includes an example line 408 indicating values of the harvesting operation metric (e.g., the grain loss metric) at corresponding times along the first axis 402. In some examples, a characteristic (e.g., color, shape, size, brightness, pattern, etc.) of the line 408 can vary along the first axis 402, where the characteristic can represent classifications of the harvesting operation metric at the corresponding times, confidence levels associated with the classifications, etc.

In some examples, the display control circuitry 210 of FIG. 2 causes the user interface 108 to present one(s) of the images 220 (e.g., the first image 220A and/or the second image 220B), one(s) of the classifications (e.g., the first classification 306), one(s) of the harvesting operation metrics, and/or one(s) of the confidence levels at one or more times (e.g., corresponding to one or more locations along the line 408). For example, an operator can select the time(s) via user input to the user interface 108, and the display control circuitry 210 causes the user interface 108 to present one(s) of the images 220, the classifications, the harvesting operation metrics, and/or the confidence levels corresponding to the selected times(s). As described above in connection with FIG. 3, the operator can, via user input to the user interface 108, confirm and/or adjust one(s) of the classifications, the harvesting operation metrics, and/or the confidence levels. In some examples, the display control circuitry 210 adjusts the plot 400 based on the user input. Additionally or alternatively, the classification circuitry 208 of FIG. 2 can adjust one or more classification thresholds and/or re-train one or more classification models based on the user input.

FIG. 5 illustrates an example table 500 representing example operation information that can be monitored and/or obtained by the operation monitoring circuitry of FIG. 2. In the illustrated example of FIG. 5, the table 500 includes a second example column 504 representing example harvesting operation metrics that can be determined by the operation monitoring circuitry 102. For example, the operation harvesting metrics can include a grain loss metric, a tailings metric, a cut plant metric, a plant characteristic metric, a commodity characteristic metric, a material flow metric, a field condition metric, a weed characteristic metric, and/or a windrow metric. In some examples, one or more different harvesting operation metrics can be used in addition to or instead of one(s) of the harvesting operation metrics shown in FIG. 5.

In the illustrated example of FIG. 5, the table 500 includes a first example column 502 representing example images (e.g., context images) captured by the camera(s) 110 of FIG. 1 for corresponding one(s) of the harvesting operation metrics in the second column 504. For example, the image(s) can be representative of one or more scenes internal to the vehicle 100 (e.g., inside and/or adjacent to the separator 104B and/or the cleaning shoe 104C of FIG. 1, at the header 104A, etc.). In some examples, the image(s) can be representative of one or more scenes external to the vehicle 100 (e.g., a forward-facing scene and/or a rearward-facing scene with respect to the vehicle 100, sideways with respect to the vehicle 100, etc.).

In the illustrated example of FIG. 5, the table 500 includes a third example column 506 representative of example characteristics and/or metrics that may be included in corresponding one(s) of the harvesting operation metrics in the second column 504. Further, the table 500 includes a fourth example column 508 indicating whether corresponding one(s) of the harvesting operation metrics represented in the second column 504 are derived from (e.g., determined based on) the image(s) represented in the first column 502. In this example, the table 500 includes a fifth example column 510 representing example one(s) of the sensors 106 of FIG. 1 that can be used to determine corresponding one(s) of the harvesting operation metrics represented in the second column 504. In some examples, one or more different sensors can be used in addition to or instead of one(s) of the sensors 106 shown in the fifth column 510 of FIG. 5. In the illustrated example of FIG. 5, a sixth example column 512 represents one or more example actuators and/or example one(s) of the vehicle systems 104 of FIG. 1 that can be adjusted by the example operation monitoring circuitry 102 of FIGS. 1 and/or 2 based on the harvesting operation metrics represented in the second column 504. In some examples, different one(s) of the sensors 106 and/or the actuators can be represented in the example table 500 (e.g., in addition to or instead of one(s) of the sensors 106 and/or the actuators represented in FIG. 5). In some examples, the example table 500 of FIG. 5 can be stored in the example database 218 of FIG. 2 and/or output for presentation to an operator by the display control circuitry 210 of FIG. 2.

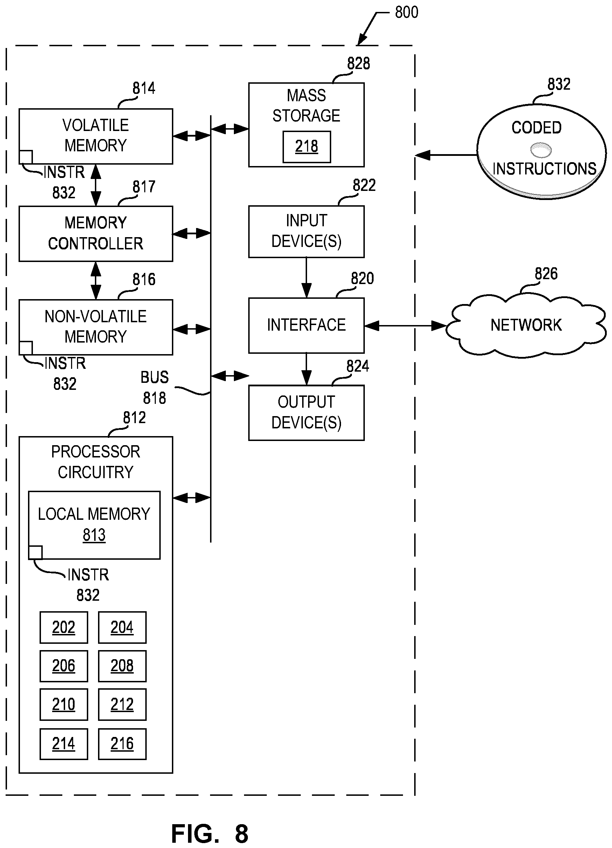

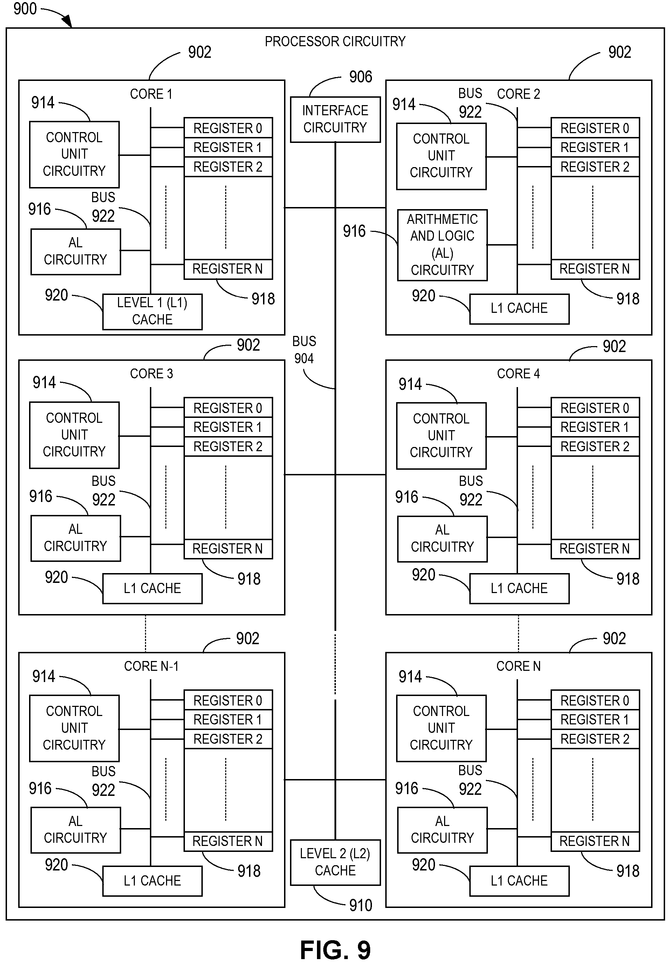

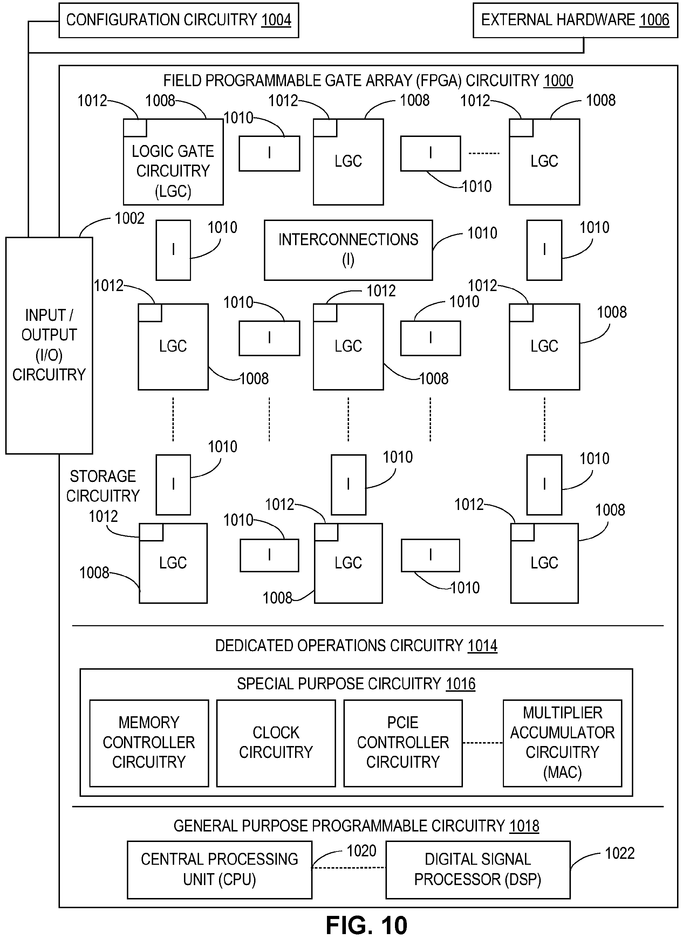

In some examples, the operation monitoring circuitry 102 includes means for obtaining sensor data. For example, the means for obtaining sensor data may be implemented by the sensor interface circuitry 202. In some examples, the sensor interface circuitry 202 may be instantiated by programmable circuitry such as the example programmable circuitry 812 of FIG. 8. For instance, the sensor interface circuitry 202 may be instantiated by the example microprocessor 900 of FIG. 9 executing machine executable instructions such as those implemented by at least blocks 602, 604, 618 of FIG. 6. In some examples, sensor interface circuitry 202 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the sensor interface circuitry 202 may be instantiated by any other combination of hardware, software, and/or firmware. For example, the sensor interface circuitry 202 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the operation monitoring circuitry 102 includes means for generating a map. For example, the means for generating a map may be implemented by the map generation circuitry 204. In some examples, the map generation circuitry 204 may be instantiated by programmable circuitry such as the example programmable circuitry 812 of FIG. 8. For instance, the map generation circuitry 204 may be instantiated by the example microprocessor 900 of FIG. 9 executing machine executable instructions such as those implemented by at least block 610 of FIG. 6. In some examples, map generation circuitry 204 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the map generation circuitry 204 may be instantiated by any other combination of hardware, software, and/or firmware. For example, the map generation circuitry 204 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the operation monitoring circuitry 102 includes means for obtaining user input. For example, the means for obtaining user input may be implemented by the input interface circuitry 206. In some examples, the input interface circuitry 206 may be instantiated by programmable circuitry such as the example programmable circuitry 812 of FIG. 8. For instance, the input interface circuitry 206 may be instantiated by the example microprocessor 900 of FIG. 9 executing machine executable instructions such as those implemented by at least blocks 702, 718 of FIG. 7. In some examples, input interface circuitry 206 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the input interface circuitry 206 may be instantiated by any other combination of hardware, software, and/or firmware. For example, the input interface circuitry 206 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the operation monitoring circuitry 102 includes means for classifying. For example, the means for classifying may be implemented by the classification circuitry 208. In some examples, the classification circuitry 208 may be instantiated by programmable circuitry such as the example programmable circuitry 812 of FIG. 8. For instance, the classification circuitry 208 may be instantiated by the example microprocessor 900 of FIG. 9 executing machine executable instructions such as those implemented by at least blocks 606, 608 of FIG. 6 and/or blocks 710, 712 of FIG. 7. In some examples, classification circuitry 208 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the classification circuitry 208 may be instantiated by any other combination of hardware, software, and/or firmware. For example, the classification circuitry 208 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the operation monitoring circuitry 102 includes means for controlling a display. For example, the means for controlling a display may be implemented by the display control circuitry 210. In some examples, the display control circuitry 210 may be instantiated by programmable circuitry such as the example programmable circuitry 812 of FIG. 8. For instance, the display control circuitry 210 may be instantiated by the example microprocessor 900 of FIG. 9 executing machine executable instructions such as those implemented by at least blocks 612, 616 of FIG. 6 and/or blocks 704, 706, 708, 716 of FIG. 7. In some examples, display control circuitry 210 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the display control circuitry 210 may be instantiated by any other combination of hardware, software, and/or firmware. For example, the display control circuitry 210 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the operation monitoring circuitry 102 includes means for training. For example, the means for training may be implemented by the model training circuitry 212. In some examples, the model training circuitry 212 may be instantiated by programmable circuitry such as the example programmable circuitry 812 of FIG. 8. For instance, the model training circuitry 212 may be instantiated by the example microprocessor 900 of FIG. 9 executing machine executable instructions such as those implemented by at least block 714 of FIG. 7. In some examples, model training circuitry 212 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the model training circuitry 212 may be instantiated by any other combination of hardware, software, and/or firmware. For example, the model training circuitry 212 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the operation monitoring circuitry 102 includes means for controlling a vehicle setting. For example, the means for controlling a vehicle setting may be implemented by the setting control circuitry 214. In some examples, the setting control circuitry 214 may be instantiated by programmable circuitry such as the example programmable circuitry 812 of FIG. 8. For instance, the setting control circuitry 214 may be instantiated by the example microprocessor 900 of FIG. 9 executing machine executable instructions such as those implemented by at least block 614 of FIG. 6. In some examples, setting control circuitry 214 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the setting control circuitry 214 may be instantiated by any other combination of hardware, software, and/or firmware. For example, the setting control circuitry 214 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the operation monitoring circuitry 102 includes means for interfacing with a network. For example, the means for interfacing with a network may be implemented by the network interface circuitry 216. In some examples, the network interface circuitry 216 may be instantiated by programmable circuitry such as the example programmable circuitry 812 of FIG. 8. For instance, the network interface circuitry 216 may be instantiated by the example microprocessor 900 of FIG. 9 executing machine executable instructions such as those implemented by at least block 604 of FIG. 6 and/or blocks 702, 706 of FIG. 7. In some examples, network interface circuitry 216 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the network interface circuitry 216 may be instantiated by any other combination of hardware, software, and/or firmware. For example, the network interface circuitry 216 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the operation monitoring circuitry 102 of FIG. 1 is illustrated in FIG. 2, one or more of the elements, processes, and/or devices illustrated in FIG. 2 may be combined, divided, re-arranged, omitted, eliminated, and/or implemented in any other way. Further, the example sensor interface circuitry 202, the example map generation circuitry 204, the example input interface circuitry 206, the example classification circuitry 208, the example display control circuitry 210, the example model training circuitry 212, the example setting control circuitry 214, the example network interface circuitry 216, and/or, more generally, the example operation monitoring circuitry 102 of FIG. 2, may be implemented by hardware alone or by hardware in combination with software and/or firmware. Thus, for example, any of the example sensor interface circuitry 202, the example map generation circuitry 204, the example input interface circuitry 206, the example classification circuitry 208, the example display control circuitry 210, the example model training circuitry 212, the example setting control circuitry 214, the example network interface circuitry 216, and/or, more generally, the example operation monitoring circuitry 102, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example operation monitoring circuitry 102 of FIG. 2 may include one or more elements, processes, and/or devices in addition to, or instead of, those illustrated in FIG. 2, and/or may include more than one of any or all of the illustrated elements, processes and devices.

Flowchart(s) representative of example machine readable instructions, which may be executed by programmable circuitry to implement and/or instantiate the operation monitoring circuitry 102 of FIG. 2 and/or representative of example operations which may be performed by programmable circuitry to implement and/or instantiate the operation monitoring circuitry 102 of FIG. 2, are shown in FIGS. 6 and/or 7. The machine readable instructions may be one or more executable programs or portion(s) of one or more executable programs for execution by programmable circuitry such as the programmable circuitry 812 shown in the example programmable circuitry platform 800 discussed below in connection with FIG. 8 and/or may be one or more function(s) or portion(s) of functions to be performed by the example programmable circuitry (e.g., an FPGA) discussed below in connection with FIGS. 9 and/or 10. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 6 and/or 7, many other methods of implementing the example operation monitoring circuitry 102 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 6 and/or 7 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 6 is a flowchart representative of example machine readable instructions and/or example operations 600 that may be executed, instantiated, and/or performed by programmable circuitry to implement the example operation monitoring circuitry 102 of FIGS. 1 and/or 2. The example machine-readable instructions and/or the example operations 600 of FIG. 6 begin at block 602, at which the example operation monitoring circuitry 102 accesses one or more example images captured by the example camera(s) 110 of FIG. 1. For example, the example sensor interface circuitry 202 of FIG. 2 accesses and/or obtains one or more of the images 220 of FIG. 2 captured by the camera(s) 110, where the images 220 can be representative of material output by the vehicle 100, unharvested and/or cut plants in a field, a projected path of the vehicle 100, a forward-facing and/or rearward-facing scene with respect to the vehicle 100, a location internal to and/or external to the vehicle 100, etc.

At block 604, the example operation monitoring circuitry 102 obtains the example reference data 224 and/or the example sensor data 222 obtained by the example sensor(s) 106 of FIG. 1. For example, the sensor interface circuitry 202 obtains the reference data 224 and/or the sensor data 222 from the sensor(s) 106. In some examples, the reference data 224 includes geographic locations and/or times at which the images 220 were captured. In some examples, the sensor data 222 includes signal(s) from one or more of the sensors 106, where the signal(s) are representative of an environment of the example vehicle 100 of FIG. 1, one or more objects surrounding the vehicle 100, material(s) (e.g., harvested crop material, grain material, crop residue, etc.) being processed by one or more of the vehicle systems 104 of FIG. 1, etc. In some examples, the example network interface circuitry 216 of FIG. 2 obtains at least one of the sensor data 222 or the reference data 224 via one or more devices (e.g., sensors and/or computers) communicatively coupled to the vehicle 100 via the example network 112 of FIG. 1.

At block 606, the example operation monitoring circuitry 102 determines one or more example harvesting operation metrics corresponding to one(s) of the images 220. For example, the example classification circuitry 208 of FIG. 2 determines the harvesting operation metrics including, for example, a grain loss metric, a tailings metric, a cut plant metric, a plant characteristic metric, a commodity characteristic metric, a material flow metric, a field condition metric, a weed characteristic metric, a windrow metric, etc. In some examples, the classification circuitry 208 determines the harvesting operation metrics based on image processing and/or optical analysis of the image(s) 220 and/or based on the sensor data 222 from one or more of the sensors 106.

At block 608, the example operation monitoring circuitry 102 determines one or more classifications for the image(s) 220 based on the corresponding harvesting operation metrics. For example, the classification circuitry 208 determines the classification(s) for corresponding one(s) of the image(s) 220 by comparing the harvesting operation metrics to one or more classification thresholds. For example, the classification circuitry 208 determines whether a quantity of grain loss represented in the corresponding image(s) 220 is acceptable or excessive based on whether the associated grain loss metrics satisfy the classification threshold(s). In some examples, one or more different classifications may additionally or alternatively be used. For example, one or more classifications can be qualitative (e.g., instead of quantitative). In one example, classifications for cut length of crop residue can include long, medium, and/or short (e.g., instead of numeric ranges based on units of inches). In some examples, different classifications can be used for respective one(s) of the harvesting operation metrics. In some examples, the classification circuitry 208 determines the classification(s) by providing the image(s) 220 and/or the associated harvesting operation metrics as input to one or more classification model(s). In some such examples, the classification model(s) include one or more neural network models trained based on labeled training data including images of processed crop material, grain material, a portion of the field in a projected path and/or surrounding the vehicle 100, etc., and associated classification labels. In some examples, the classification circuitry 208 determines confidence level(s) associated with the classification(s).

At block 610, the example operation monitoring circuitry 102 generates one or more example maps and/or plots to be included in the example display information 226 of FIG. 2. For example, the example map generation circuitry 204 of FIG. 2 generates the map(s) and/or plot(s) by storing operation information (e.g., the image(s) 220, the harvesting operation metric(s), and/or the classification(s)) in association with the corresponding time(s) and/or geographic location(s) represented in the reference data 224. For example, the map generation circuitry 204 generates an example geographic map (e.g., the example map 300 of FIG. 3) by associating the operation information with the geographic locations for which the operation information was obtained and/or determined. Additionally or alternatively, the map generation circuitry 204 generates an example plot (e.g., a time history, the example plot 400 of FIG. 4) by associating the operation information with the times for which the operation information was obtained and/or determined.

At block 612, the example operation monitoring circuitry 102 causes presentation of the example display information 226 via the example user interface 108 of FIG. 1. For example, the example display control circuitry 210 of FIG. 2 causes the user interface 108 to present the display information 226 including one or more of the maps and/or plots generated by the map generation circuitry 204. In some examples, the display control circuitry 210 causes the user interface 108 to present one(s) of the images 220, the harvesting operation metrics, and/or the classifications associated with selected one(s) of the times and/or geographic locations represented in the map(s) and/or plot(s). In some examples, the display control circuitry 210 can cause the user interface 108 to present one(s) of the images 220, the harvesting operation metrics, and/or the classifications alone (e.g., without reference to the time(s) and/or geographic location(s) represented in the reference data 224).

At block 614, the example operation monitoring circuitry 102 adjusts one or more vehicle control settings based on the classification(s). For example, the example setting control circuitry 214 of FIG. 2 adjusts, based on the classification(s), at least one of the vehicle control settings including position and/or height of the header 104A, rotor speed and/or concave clearance of the separator 104B, fan speed, sieve settings, and/or chaffer settings of the cleaning shoe 104C, propulsion and/or travel speed of the propulsion system 104F, steering direction of the steering system 104E, vane positions of the residue system 104D, etc. In some examples, the setting control circuitry 214 directs one(s) of the vehicle systems 104 to adjust the one(s) of the vehicle control settings in response to determining that one(s) of the harvesting operation metrics are not satisfied (e.g., the grain loss is excessive at one or more geographic locations and/or times, etc.).

At block 616, the example operation monitoring circuitry 102 updates the display information 226 based on example user input 228 provided via the user interface 108. For example, the display control circuitry 210 presents and/or adjusts one(s) of the images 220, the classifications, and/or the harvesting operation metrics based on a selection by the operator via the user input 228. Updating of the display information 226 based on the user input 228 is described further below in connection with FIG. 7.

At block 618, the example operation monitoring circuitry 102 determines whether the display information 226 has been updated. For example, the display control circuitry 210 determines whether one(s) of the harvesting operation metrics and/or one(s) the classifications have been updated based on user input and/or as a result of one(s) of the classifications changing for one or more images. In response to the display control circuitry 210 determining that the display information 226 has been updated (e.g., block 618 returns a result of YES), control proceeds to block 620. Alternatively, in response to the display control circuitry 210 determining that the display information 226 has not been updated (e.g., block 618 returns a result of NO), control proceeds to block 622.

At block 620, the example operation monitoring circuitry 102 adjusts (e.g., re-adjusts) one or more of the vehicle control settings based on the updated display information 226. For example, the example setting control circuitry 214 adjusts, based on updated classification(s) in the updated display information 226, at least one of the vehicle control settings (e.g., position and/or height of the header 104A, rotor speed and/or concave clearance of the separator 104B, fan speed, sieve settings, and/or chaffer settings of the cleaning shoe 104C, propulsion and/or travel speed of the propulsion system 104F, steering direction of the steering system 104E, vane positions of the residue system 104D, etc.). In some examples, the setting control circuitry 214 directs one(s) of the vehicle systems 104 to adjust the one(s) of the vehicle control settings in response to determining that one(s) of the harvesting operation metrics are not satisfied based on the updated classification(s) (e.g., the grain loss is excessive at one or more geographic locations and/or times, etc.).

At block 622, the example operation monitoring circuitry 102 determines whether to continue monitoring. For example, the sensor interface circuitry 202 determines to continue monitoring when the vehicle 100 is operating and/or when the sensor interface circuitry 202 receives additional image(s) 220 and/or sensor data 222. In response to the sensor interface circuitry 202 determining to continue monitoring (e.g., block 622 returns a result of YES), control returns to block 602. Alternatively, in response to the sensor interface circuitry 202 determining not to continue monitoring (e.g., block 622 returns a result of NO), control ends.

FIG. 7 is a flowchart representative of example machine readable instructions and/or example operations 700 that may be executed, instantiated, and/or performed by programmable circuitry to update the example display information 226 based on the example user input 228 of FIG. 2 in connection with block 616 of FIG. 6. The example machine-readable instructions and/or the example operations 700 of FIG. 7 begin at block 702, at which the example operation monitoring circuitry 102 accesses the example user input 228 provided via the example user interface 108 of FIG. 1. For example, the example input interface circuitry 206 of FIG. 2 obtains and/or accesses the user input 228 provided by the operator of the vehicle 100 via the user interface 108. Additionally or alternatively, the example network interface circuitry 216 obtains the user input 228 from a device (e.g., a computer and/or a mobile device) communicatively coupled to the vehicle 100 via the example network 112 of FIG. 1.

At block 704, the example operation monitoring circuitry 102 of FIG. 2 selects one or more of the image(s) 220 based on the user input 228. For example, the display control circuitry 210 selects the image(s) 220 corresponding to one or more times and/or geographic locations selected by the operator via the user input 228. In some examples, the display control circuitry 210 selects the image(s) 220 corresponding to one or more of the classifications, one or more of the harvesting operation metrics, and/or one or more of the confidence levels selected by the operator via the user input 228.

At block 706, the example operation monitoring circuitry 102 causes presentation (e.g., display) of the selected image(s) 220 and/or the corresponding classification(s). For example, the display control circuitry 210 causes the user interface 108 to present and/or enlarge the selected image(s) 220 and/or the corresponding classification(s) to the operator. In some examples, the network interface circuitry 216 causes presentation of the selected image(s) 220 and/or the corresponding classification(s) by one or more devices communicatively coupled to the network interface circuitry 216 via the network 112.

At block 708, the example operation monitoring circuitry 102 enables the operator to confirm (and/or change) one(s) of the classifications for one or more of the images 220. For example, the display control circuitry 210 enables the user interface 108 to present one or more interactive controls (e.g., the interactive controls 308, 310 of FIG. 3) to the operator for at least one of confirming or changing the one(s) of the classifications for the images 220. In some examples, the interactive controls correspond to respective one(s) of the images 220, such that the operator can confirm and/or change the classifications for the respective one(s) of the images 220. In some examples, one of the interactive controls corresponds to multiple ones of images 220, such that the operator can confirm and/or change multiple classifications for the multiple ones of the images 220 at substantially the same time.

At block 710, the example operation monitoring circuitry 102 determines whether one or more of the classifications changed. For example, the example classification circuitry 208 of FIG. 2 determines whether the operator changed one(s) of the classifications based on the user input 228. In response to the classification circuitry 208 determining that one or more of the classifications changed (e.g., block 710 returns a result of YES), control proceeds to block 712. Alternatively, in response to the classification circuitry 208 determining that the classifications were confirmed and/or not changed (e.g., block 710 returns a result of YES), control proceeds to block 718.

At block 712, the example operation monitoring circuitry 102 re-classifies one or more of the images 220 based on the user input 228. For example, the classification circuitry 208 updates one(s) of the classifications based on new classification(s) selected by the operator via the user input 228. In some examples, the classification circuitry 208 updates, in response to the operator changing one or more first classifications for first one(s) of the images 220, one or more second classifications for second one(s) of the images 220 that are similar to the first one(s) of the images 220 and/or have similar harvesting operation metrics compared to the first one(s) of the images 220.

At block 714, the example operation monitoring circuitry 102 adjusts and/or re-trains one or more classification models and/or one or more classification thresholds utilized by the classification circuitry 208. For example, the example model training circuitry 212 of FIG. 2 generates new training data based on the updated classification(s), and re-trains the classification model(s) based on the new training data. Additionally or alternatively, the model training circuitry 212 adjusts the classification threshold(s) such that the classification circuitry 208 outputs the operator-adjusted classification(s) when the associated one(s) of the images 220 are evaluated based on the classification threshold(s).

At block 716, the example operation monitoring circuitry 102 updates the example display information 226. For example, the display control circuitry 210 updates the display information 226 such that the user interface 108 indicates the updated classification(s) to the operator. In some examples, the display control circuitry 210 updates the display information 226 by updating labels corresponding to the image(s) 220, updating a characteristic (e.g., a color, a size, a shape, etc.) of one or more markers corresponding to the image(s) 220, etc. In some examples, the display control circuitry 210 causes the user interface 108 to present the updated display information to the operator.

At block 718, the example operation monitoring circuitry 102 determines whether additional user input 228 is received. For example, in response to the input interface circuitry 206 receiving and/or obtaining additional user input 228 (e.g., block 718 returns a result of YES), control returns to block 702. Alternatively, in response to the input interface circuitry 206 not receiving and/or not obtaining additional user input 228 (e.g., block 718 returns a result of NO), control returns to the process of FIG. 6.

FIG. 8 is a block diagram of an example programmable circuitry platform 800 structured to execute and/or instantiate the example machine-readable instructions and/or the example operations of FIGS. 6 and/or 7 to implement the operation monitoring circuitry 102 of FIG. 2. The programmable circuitry platform 800 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 800 of the illustrated example includes programmable circuitry 812. The programmable circuitry 812 of the illustrated example is hardware. For example, the programmable circuitry 812 can be implemented by one or more integrated circuits, logic circuits, FPGAs, microprocessors, CPUs, GPUs, DSPs, and/or microcontrollers from any desired family or manufacturer. The programmable circuitry 812 may be implemented by one or more semiconductor based (e.g., silicon based) devices. In this example, the programmable circuitry 812 implements the example sensor interface circuitry 202, the example map generation circuitry 204, the example input interface circuitry 206, the example classification circuitry 208, the example display control circuitry 210, the example model training circuitry 212, the example setting control circuitry 214, and/or the example network interface circuitry 216.

The programmable circuitry 812 of the illustrated example includes a local memory 813 (e.g., a cache, registers, etc.). The programmable circuitry 812 of the illustrated example is in communication with main memory 814, 816, which includes a volatile memory 814 and a non-volatile memory 816, by a bus 818. The volatile memory 814 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 816 may be implemented by flash memory and/or any other desired type of memory device. Access to the main memory 814, 816 of the illustrated example is controlled by a memory controller 817. In some examples, the memory controller 817 may be implemented by one or more integrated circuits, logic circuits, microcontrollers from any desired family or manufacturer, or any other type of circuitry to manage the flow of data going to and from the main memory 814, 816.

The programmable circuitry platform 800 of the illustrated example also includes interface circuitry 820. The interface circuitry 820 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 822 are connected to the interface circuitry 820. The input device(s) 822 permit(s) a user (e.g., a human user, a machine user, etc.) to enter data and/or commands into the programmable circuitry 812. The input device(s) 822 can be implemented by, for example, an audio sensor, a microphone, a camera (still or video), a keyboard, a button, a mouse, a touchscreen, a trackpad, a trackball, an isopoint device, and/or a voice recognition system.

One or more output devices 824 are also connected to the interface circuitry 820 of the illustrated example. The output device(s) 824 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 820 of the illustrated example, thus, typically includes a graphics driver card, a graphics driver chip, and/or graphics processor circuitry such as a GPU.

The interface circuitry 820 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 826. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 800 of the illustrated example also includes one or more mass storage discs or devices 828 to store firmware, software, and/or data. Examples of such mass storage discs or devices 828 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 832, which may be implemented by the machine readable instructions of FIGS. 6 and/or 7, may be stored in the mass storage device 828, in the volatile memory 814, in the non-volatile memory 816, and/or on at least one non-transitory computer readable storage medium such as a CD or DVD which may be removable.

FIG. 9 is a block diagram of an example implementation of the programmable circuitry 812 of FIG. 8. In this example, the programmable circuitry 812 of FIG. 8 is implemented by a microprocessor 900. For example, the microprocessor 900 may be a general-purpose microprocessor (e.g., general-purpose microprocessor circuitry). The microprocessor 900 executes some or all of the machine-readable instructions of the flowcharts of FIGS. 6 and/or 7 to effectively instantiate the circuitry of FIG. 2 as logic circuits to perform operations corresponding to those machine readable instructions. In some such examples, the circuitry of FIG. 2 is instantiated by the hardware circuits of the microprocessor 900 in combination with the machine-readable instructions. For example, the microprocessor 900 may be implemented by multi-core hardware circuitry such as a CPU, a DSP, a GPU, an XPU, etc. Although it may include any number of example cores 902 (e.g., 1 core), the microprocessor 900 of this example is a multi-core semiconductor device including N cores. The cores 902 of the microprocessor 900 may operate independently or may cooperate to execute machine readable instructions. For example, machine code corresponding to a firmware program, an embedded software program, or a software program may be executed by one of the cores 902 or may be executed by multiple ones of the cores 902 at the same or different times. In some examples, the machine code corresponding to the firmware program, the embedded software program, or the software program is split into threads and executed in parallel by two or more of the cores 902. The software program may correspond to a portion or all of the machine readable instructions and/or operations represented by the flowcharts of FIGS. 6 and/or 7.

The cores 902 may communicate by a first example bus 904. In some examples, the first bus 904 may be implemented by a communication bus to effectuate communication associated with one(s) of the cores 902. For example, the first bus 904 may be implemented by at least one of an Inter-Integrated Circuit (I2C) bus, a Serial Peripheral Interface (SPI) bus, a PCI bus, or a PCIe bus. Additionally or alternatively, the first bus 904 may be implemented by any other type of computing or electrical bus. The cores 902 may obtain data, instructions, and/or signals from one or more external devices by example interface circuitry 906. The cores 902 may output data, instructions, and/or signals to the one or more external devices by the interface circuitry 906. Although the cores 902 of this example include example local memory 920 (e.g., Level 1 (L1) cache that may be split into an L1 data cache and an L1 instruction cache), the microprocessor 900 also includes example shared memory 910 that may be shared by the cores (e.g., Level 2 (L2 cache)) for high-speed access to data and/or instructions. Data and/or instructions may be transferred (e.g., shared) by writing to and/or reading from the shared memory 910. The local memory 920 of each of the cores 902 and the shared memory 910 may be part of a hierarchy of storage devices including multiple levels of cache memory and the main memory (e.g., the main memory 814, 816 of FIG. 8). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 902 may be referred to as a CPU, DSP, GPU, etc., or any other type of hardware circuitry. Each core 902 includes control unit circuitry 914, arithmetic and logic (AL) circuitry (sometimes referred to as an ALU) 916, a plurality of registers 918, the local memory 920, and a second example bus 922. Other structures may be present. For example, each core 902 may include vector unit circuitry, single instruction multiple data (SIMD) unit circuitry, load/store unit (LSU) circuitry, branch/jump unit circuitry, floating-point unit (FPU) circuitry, etc. The control unit circuitry 914 includes semiconductor-based circuits structured to control (e.g., coordinate) data movement within the corresponding core 902. The AL circuitry 916 includes semiconductor-based circuits structured to perform one or more mathematic and/or logic operations on the data within the corresponding core 902. The AL circuitry 916 of some examples performs integer based operations. In other examples, the AL circuitry 916 also performs floating-point operations. In yet other examples, the AL circuitry 916 may include first AL circuitry that performs integer-based operations and second AL circuitry that performs floating-point operations. In some examples, the AL circuitry 916 may be referred to as an Arithmetic Logic Unit (ALU).

The registers 918 are semiconductor-based structures to store data and/or instructions such as results of one or more of the operations performed by the AL circuitry 916 of the corresponding core 902. For example, the registers 918 may include vector register(s), SIMD register(s), general-purpose register(s), flag register(s), segment register(s), machine-specific register(s), instruction pointer register(s), control register(s), debug register(s), memory management register(s), machine check register(s), etc. The registers 918 may be arranged in a bank as shown in FIG. 9. Alternatively, the registers 918 may be organized in any other arrangement, format, or structure, such as by being distributed throughout the core 902 to shorten access time. The second bus 922 may be implemented by at least one of an I2C bus, a SPI bus, a PCI bus, or a PCIe bus.

Each core 902 and/or, more generally, the microprocessor 900 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 900 is a semiconductor device fabricated to include many transistors interconnected to implement the structures described above in one or more integrated circuits (ICs) contained in one or more packages.

The microprocessor 900 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 900, in the same chip package as the microprocessor 900 and/or in one or more separate packages from the microprocessor 900.

FIG. 10 is a block diagram of another example implementation of the programmable circuitry 812 of FIG. 8. In this example, the programmable circuitry 812 is implemented by FPGA circuitry 1000. For example, the FPGA circuitry 1000 may be implemented by an FPGA. The FPGA circuitry 1000 can be used, for example, to perform operations that could otherwise be performed by the example microprocessor 900 of FIG. 9 executing corresponding machine readable instructions. However, once configured, the FPGA circuitry 1000 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 900 of FIG. 9 described above (which is a general purpose device that may be programmed to execute some or all of the machine readable instructions represented by the flowchart(s) of FIGS. 6 and/or 7 but whose interconnections and logic circuitry are fixed once fabricated), the FPGA circuitry 1000 of the example of FIG. 10 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 6 and/or 7. In particular, the FPGA circuitry 1000 may be thought of as an array of logic gates, interconnections, and switches. The switches can be programmed to change how the logic gates are interconnected by the interconnections, effectively forming one or more dedicated logic circuits (unless and until the FPGA circuitry 1000 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 6 and/or 7. As such, the FPGA circuitry 1000 may be configured and/or structured to effectively instantiate some or all of the operations/functions corresponding to the machine readable instructions of the flowchart(s) of FIGS. 6 and/or 7 as dedicated logic circuits to perform the operations/functions corresponding to those software instructions in a dedicated manner analogous to an ASIC. Therefore, the FPGA circuitry 1000 may perform the operations/functions corresponding to the some or all of the machine readable instructions of FIGS. 6 and/or 7 faster than the general-purpose microprocessor can execute the same.

In the example of FIG. 10, the FPGA circuitry 1000 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1000 of FIG. 10 may access and/or load the binary file to cause the FPGA circuitry 1000 of FIG. 10 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1000 of FIG. 10 to cause configuration and/or structuring of the FPGA circuitry 1000 of FIG. 10, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1000 of FIG. 10 may access and/or load the binary file to cause the FPGA circuitry 1000 of FIG. 10 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1000 of FIG. 10 to cause configuration and/or structuring of the FPGA circuitry 1000 of FIG. 10, or portion(s) thereof.

The FPGA circuitry 1000 of FIG. 10, includes example input/output (I/O) circuitry 1002 to obtain and/or output data to/from example configuration circuitry 1004 and/or external hardware 1006. For example, the configuration circuitry 1004 may be implemented by interface circuitry that may obtain a binary file, which may be implemented by a bit stream, data, and/or machine-readable instructions, to configure the FPGA circuitry 1000, or portion(s) thereof. In some such examples, the configuration circuitry 1004 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1006 may be implemented by external hardware circuitry. For example, the external hardware 1006 may be implemented by the microprocessor 900 of FIG. 9.

The FPGA circuitry 1000 also includes an array of example logic gate circuitry 1008, a plurality of example configurable interconnections 1010, and example storage circuitry 1012. The logic gate circuitry 1008 and the configurable interconnections 1010 are configurable to instantiate one or more operations/functions that may correspond to at least some of the machine readable instructions of FIGS. 6 and/or 7 and/or other desired operations. The logic gate circuitry 1008 shown in FIG. 10 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1008 to enable configuration of the electrical structures and/or the logic gates to form circuits to perform desired operations/functions. The logic gate circuitry 1008 may include other electrical structures such as look-up tables (LUTs), registers (e.g., flip-flops or latches), multiplexers, etc.

The configurable interconnections 1010 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1008 to program desired logic circuits.

The storage circuitry 1012 of the illustrated example is structured to store result(s) of the one or more of the operations performed by corresponding logic gates. The storage circuitry 1012 may be implemented by registers or the like. In the illustrated example, the storage circuitry 1012 is distributed amongst the logic gate circuitry 1008 to facilitate access and increase execution speed.

The example FPGA circuitry 1000 of FIG. 10 also includes example dedicated operations circuitry 1014. In this example, the dedicated operations circuitry 1014 includes special purpose circuitry 1016 that may be invoked to implement commonly used functions to avoid the need to program those functions in the field. Examples of such special purpose circuitry 1016 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1000 may also include example general purpose programmable circuitry 1018 such as an example CPU 1020 and/or an example DSP 1022. Other general purpose programmable circuitry 1018 may additionally or alternatively be present such as a GPU, an XPU, etc., that can be programmed to perform other operations.

Although FIGS. 9 and 10 illustrate two example implementations of the programmable circuitry 812 of FIG. 8, many other approaches are contemplated. For example, FPGA circuitry may include an on-board CPU, such as one or more of the example CPU 1020 of FIG. 9. Therefore, the programmable circuitry 812 of FIG. 8 may additionally be implemented by combining at least the example microprocessor 900 of FIG. 9 and the example FPGA circuitry 1000 of FIG. 10. In some such hybrid examples, one or more cores 902 of FIG. 9 may execute a first portion of the machine readable instructions represented by the flowchart(s) of FIGS. 6 and/or 7 to perform first operation(s)/function(s), the FPGA circuitry 1000 of FIG. 10 may be configured and/or structured to perform second operation(s)/function(s) corresponding to a second portion of the machine readable instructions represented by the flowcharts of FIG. 6 and/or 7, and/or an ASIC may be configured and/or structured to perform third operation(s)/function(s) corresponding to a third portion of the machine readable instructions represented by the flowcharts of FIGS. 6 and/or 7.

It should be understood that some or all of the circuitry of FIG. 2 may, thus, be instantiated at the same or different times. For example, same and/or different portion(s) of the microprocessor 900 of FIG. 9 may be programmed to execute portion(s) of machine-readable instructions at the same and/or different times. In some examples, same and/or different portion(s) of the FPGA circuitry 1000 of FIG. 10 may be configured and/or structured to perform operations/functions corresponding to portion(s) of machine-readable instructions at the same and/or different times.

In some examples, some or all of the circuitry of FIG. 2 may be instantiated, for example, in one or more threads executing concurrently and/or in series. For example, the microprocessor 900 of FIG. 9 may execute machine readable instructions in one or more threads executing concurrently and/or in series. In some examples, the FPGA circuitry 1000 of FIG. 10 may be configured and/or structured to carry out operations/functions concurrently and/or in series. Moreover, in some examples, some or all of the circuitry of FIG. 2 may be implemented within one or more virtual machines and/or containers executing on the microprocessor 900 of FIG. 9.

In some examples, the programmable circuitry 812 of FIG. 8 may be in one or more packages. For example, the microprocessor 900 of FIG. 9 and/or the FPGA circuitry 1000 of FIG. 10 may be in one or more packages. In some examples, an XPU may be implemented by the programmable circuitry 812 of FIG. 8, which may be in one or more packages. For example, the XPU may include a CPU (e.g., the microprocessor 900 of FIG. 9, the CPU 1020 of FIG. 10, etc.) in one package, a DSP (e.g., the DSP 1022 of FIG. 10) in another package, a GPU in yet another package, and an FPGA (e.g., the FPGA circuitry 1000 of FIG. 10) in still yet another package.

A block diagram illustrating an example software distribution platform 1105 to distribute software such as the example machine readable instructions 832 of FIG. 8 to other hardware devices (e.g., hardware devices owned and/or operated by third parties from the owner and/or operator of the software distribution platform) is illustrated in FIG. 11. The example software distribution platform 1105 may be implemented by any computer server, data facility, cloud service, etc., capable of storing and transmitting software to other computing devices. The third parties may be customers of the entity owning and/or operating the software distribution platform 1105. For example, the entity that owns and/or operates the software distribution platform 1105 may be a developer, a seller, and/or a licensor of software such as the example machine readable instructions 832 of FIG. 8. The third parties may be consumers, users, retailers, OEMs, etc., who purchase and/or license the software for use and/or re-sale and/or sub-licensing. In the illustrated example, the software distribution platform 1005 includes one or more servers and one or more storage devices. The storage devices store the machine readable instructions 832, which may correspond to the example machine readable instructions of FIGS. 6 and/or 7, as described above. The one or more servers of the example software distribution platform 1105 are in communication with an example network 1110, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 832 from the software distribution platform 1105. For example, the software, which may correspond to the example machine readable instructions of FIG. 6 and/or 7, may be downloaded to the example programmable circuitry platform 800, which is to execute the machine readable instructions 832 to implement the operation monitoring circuitry 102. In some examples, one or more servers of the software distribution platform 1105 periodically offer, transmit, and/or force updates to the software (e.g., the example machine readable instructions 832 of FIG. 8) to ensure improvements, patches, updates, etc., are distributed and applied to the software at the end user devices. Although referred to as software above, the distributed "software" could alternatively be firmware.

From the foregoing, it will be appreciated that example systems, apparatus, articles of manufacture, and methods have been disclosed that enable an operator of a vehicle (e.g., an agricultural vehicle) to monitor harvesting operation metrics of one or more example vehicle systems of the vehicle. Examples disclosed herein generate one or more example maps (e.g., interactive maps) to be presented to the operator via an example user interface, where the map(s) associate example image(s) with corresponding times and/or geographic location(s) at which the image(s) were captured. Examples disclosed herein determine example harvesting operation metric(s) and/or example classification(s) associated with the image(s), and present the harvesting operation metric(s) and/or the classification(s) with the corresponding image(s) in the map(s). In some examples, the determined classification(s) and/or the determined harvesting operation metric(s) can be used to control and/or adjust (e.g., in substantially real time, during operation, after an operation, etc.) parameter(s) of the vehicle system(s) to improve performance of the vehicle system(s). Further, disclosed systems, apparatus, articles of manufacture, and methods improve the efficiency of using a computing device by adjusting and/or re-training one or more classification models and/or classification thresholds based on the operator confirming and/or changing one(s) of the classifications, thus improving accuracy of classification(s) determined for the image(s). Disclosed systems, apparatus, articles of manufacture, and methods are accordingly directed to one or more improvement(s) in the operation of a machine such as a computer or other electronic and/or mechanical device.

Example methods, apparatus, systems, and articles of manufacture to monitor a harvesting operation of an agricultural vehicle are disclosed herein. Further examples and combinations thereof include the following:
Example 1 includes an apparatus comprising memory, machine readable instructions, and programmable circuitry to execute the machine readable instructions to access an image captured by a camera associated with an agricultural vehicle, determine a harvesting operation metric corresponding to the image, generate interactive display information by storing the image in association with the harvesting operation metric, and cause presentation of the interactive display information via a user interface.
Example 2 includes the apparatus of example 1, wherein the harvesting operation metric corresponds to at least one of a grain loss metric, a tailings metric, a cut plant metric, a plant characteristic metric, a commodity characteristic metric, a material flow metric, a field condition metric, a weed characteristic metric, or windrow metric.
Example 3 includes the apparatus of example 2, wherein the grain loss metric includes at least one of a combine loss, a header loss, or a preharvest loss.
Example 4 includes the apparatus of example 2 or example 3, wherein the plant characteristic metric includes at least one of a plant height, a plant diameter, a plant health, a plant density, or a plant moisture level.
Example 5 includes the apparatus of any one of examples 2 to 4, wherein the tailings metric includes at least one of a tailings material volume, a grain amount, a free grain amount, an unthreshed grain amount, or a material other than grain (MOG) amount.
Example 6 includes the apparatus of any one of examples 2 to 5, wherein the commodity characteristic metric includes at least one of an ear height, a head height, a pod height, an ear size, a head size, a pod size, a grain size, or a kernel size.
Example 7 includes the apparatus of any one of examples 1 to 6, wherein the programmable circuitry is to adjust, based on the harvesting operation metric, a control setting of an actuator associated with the agricultural vehicle, the actuator corresponding to at least one of a separator, a cleaning shoe, a header, a residue system, a steering system, or a propulsion system of the agricultural vehicle.
Example 8 includes the apparatus of any one of examples 1 to 7, wherein the programmable circuitry is to determine a classification for the image based on (a) the harvesting operation metric and (b) at least one of a classification model or a classification threshold, enable, via the user interface, an operator to at least one of confirm the classification or select a new classification for the image, in response to the operator confirming the classification, update the interactive display information based on the classification, and in response to the operator selecting the new classification update the interactive display information based on the new classification, and based on the new classification, at least one of re-train the classification model or adjust the classification threshold.
Example 9 includes a non-transitory computer readable medium comprising instructions that, when executed, cause programmable circuitry to at least access an image captured by a camera associated with an agricultural vehicle, determine a harvesting operation metric corresponding to the image, generate interactive display information by storing the image in association with the harvesting operation metric, and cause presentation of the interactive display information via a user interface.
Example 10 includes the non-transitory computer readable medium of example 9, wherein the harvesting operation metric corresponds to at least one of a grain loss metric, a tailings metric, a cut plant metric, a plant characteristic metric, a commodity characteristic metric, a material flow metric, a field condition metric, a weed characteristic metric, or windrow metric.
Example 11 includes the non-transitory computer readable medium of example 10, wherein the grain loss metric includes at least one of a combine loss, a header loss, or a preharvest loss.
Example 12 includes the non-transitory computer readable medium of example 10 or example 11, wherein the plant characteristic metric includes at least one of a plant height, a plant diameter, a plant health, a plant density, or a plant moisture level.
Example 13 includes the non-transitory computer readable medium of any one of examples 10 to 12, wherein the tailings metric includes at least one of a tailings material volume, a grain amount, a free grain amount, an unthreshed grain amount, or a material other than grain (MOG) amount.
Example 14 includes the non-transitory computer readable medium of any one of examples 10 to 13, wherein the commodity characteristic metric includes at least one of an ear height, a head height, a pod height, an ear size, a head size, a pod size, a grain size, or a kernel size.
Example 15 includes the non-transitory computer readable medium of any one of examples 9 to 14, wherein the instructions cause the programmable circuitry to adjust, based on the harvesting operation metric, a control setting of an actuator associated with the agricultural vehicle, the actuator corresponding to at least one of a separator, a cleaning shoe, a header, a residue system, a steering system, or a propulsion system of the agricultural vehicle.
Example 16 includes a method comprising accessing an image captured by a camera associated with an agricultural vehicle, determining a harvesting operation metric corresponding to the image, generating interactive display information by storing the image in association with the harvesting operation metric, and causing presentation of the interactive display information via a user interface.
Example 17 includes the method of example 16, wherein the harvesting operation metric corresponds to at least one of a grain loss metric, a tailings metric, a cut plant metric, a plant characteristic metric, a commodity characteristic metric, a material flow metric, a field condition metric, a weed characteristic metric, or windrow metric.
Example 18 includes the method of example 17, wherein the grain loss metric includes at least one of a combine loss, a header loss, or a preharvest loss.
Example 19 includes the method of example 17, wherein the tailings metric includes at least one of a tailings material volume, a grain amount, a free grain amount, an unthreshed grain amount, or a material other than grain (MOG) amount.
Example 20 includes the method of any one of examples 16 to 19, further including adjusting, based on the harvesting operation metric, a control setting of an actuator associated with the agricultural vehicle, the actuator corresponding to at least one of a separator, a cleaning shoe, a header, a residue system, a steering system, or a propulsion system of the agricultural vehicle.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus comprising:
memory;
machine readable instructions; and
programmable circuitry to execute the machine readable instructions to:
access an image captured by a camera associated with an agricultural vehicle;
determine a harvesting operation metric corresponding to the image;
generate interactive display information by storing the image in association with the harvesting operation metric;
cause presentation of the interactive display information via a user interface; and
adjust, based on the harvesting operation metric, a control setting of an actuator associated with the agricultural vehicle.

2. The apparatus of claim 1, wherein the harvesting operation metric corresponds to at least one of a grain loss metric, a tailings metric, a cut plant metric, a plant characteristic metric, a commodity characteristic metric, a material flow metric, a field condition metric, a weed characteristic metric, or windrow metric.

3. The apparatus of claim 2, wherein the grain loss metric includes at least one of a combine loss, a header loss, or a preharvest loss.

4. The apparatus of claim 2 or claim 3, wherein the plant characteristic metric includes at least one of a plant height, a plant diameter, a plant health, a plant density, or a plant moisture level.

5. The apparatus of any one of claims 2 to 4, wherein the tailings metric includes at least one of a tailings material volume, a grain amount, a free grain amount, an unthreshed grain amount, or a material other than grain (MOG) amount.

6. The apparatus of any one of claims 2 to 5, wherein the commodity characteristic metric includes at least one of an ear height, a head height, a pod height, an ear size, a head size, a pod size, a grain size, or a kernel size.

7. The apparatus of any one of the preceding claims, wherein the actuator corresponds to at least one of a separator, a cleaning shoe, a header, a residue system, a steering system, or a propulsion system of the agricultural vehicle.

8. The apparatus of any one of the preceding claims, wherein the programmable circuitry is to:
determine a classification for the image based on (a) the harvesting operation metric and (b) at least one of a classification model or a classification threshold;
enable, via the user interface, an operator to at least one of confirm the classification or select a new classification for the image;
in response to the operator confirming the classification, update the interactive display information based on the classification; and
in response to the operator selecting the new classification:
update the interactive display information based on the new classification; and
based on the new classification, at least one of re-train the classification model or adjust the classification threshold.

9. A method comprising:
accessing an image captured by a camera associated with an agricultural vehicle;
determining a harvesting operation metric corresponding to the image;
generating interactive display information by storing the image in association with the harvesting operation metric;
causing presentation of the interactive display information via a user interface; and
adjusting, based on the harvesting operation metric, a control setting of an actuator associated with the agricultural vehicle.

10. The method of claim 9, wherein the harvesting operation metric corresponds to at least one of a grain loss metric, a tailings metric, a cut plant metric, a plant characteristic metric, a commodity characteristic metric, a material flow metric, a field condition metric, a weed characteristic metric, or windrow metric.

11. The method of claim 10, wherein the grain loss metric includes at least one of a combine loss, a header loss, or a preharvest loss.

12. The method of claim 10 or claim 11, wherein the tailings metric includes at least one of a tailings material volume, a grain amount, a free grain amount, an unthreshed grain amount, or a material other than grain (MOG) amount.

13. The method of any one of claims 9 to 12, wherein the actuator corresponds to at least one of a separator, a cleaning shoe, a header, a residue system, a steering system, or a propulsion system of the agricultural vehicle.

14. The method of any one of claims 9 to 13, further including:
determining a classification for the image based on (a) the harvesting operation metric and (b) at least one of a classification model or a classification threshold;
enabling, via the user interface, an operator to at least one of confirm the classification or select a new classification for the image;
in response to the operator confirming the classification, updating the interactive display information based on the classification; and
in response to the operator selecting the new classification:
updating the interactive display information based on the new classification; and
based on the new classification, at least one of re-training the classification model or adjusting the classification threshold.

15. A computer readable medium including machine readable instructions, when executed, to implement a method as claimed in any one of claims 9 to 14.
